(19) **Europäisches Patentamt / European Patent Office / Office européen des brevets**

(11) **EP 4 769 635 A1**

(12) # EUROPEAN PATENT APPLICATION

(43) Date of publication:
01.07.2026 Bulletin 2026/27

(21) Application number: 25227511.0

(22) Date of filing: 29.12.2025

(51) International Patent Classification (IPC):
H01M 10/42 (2006.01)   H01M 50/213 (2021.01)
H01M 50/249 (2021.01)   H01M 50/296 (2021.01)
H01M 50/503 (2021.01)   H01M 50/507 (2021.01)
H01M 50/509 (2021.01)   H01M 50/51 (2021.01)
H01M 50/519 (2021.01)   B60L 58/25 (2019.01)
A01D 34/78 (2006.01)

(52) Cooperative Patent Classification (CPC):
H01M 10/425; H01M 50/213; H01M 50/249;
H01M 50/296; H01M 50/503; H01M 50/507;
H01M 50/509; H01M 50/51; H01M 50/519;
A01D 34/78; B60L 58/25; B60L 2200/40;
H01M 2010/4271

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.12.2024 IT 202400030105

(71) Applicant: Stiga S.p.A.
31033 Castelfranco Veneto (TV) (IT)

(72) Inventors:
• MOCELLIN, Enrico
31020 San Zenone degli Ezzelini (TV) (IT)
• BARICHELLO, Marco
31030 Vallà di Riese Pio X (TV) (IT)
• PANDIN, Enrico
31020 Villorba (TV) (IT)
• FRANCO, Luca
31050 Cavasagra di Vedelago (TV) (IT)
• ZANOLIN, Alessandro
35010 Trebaseleghe (PD) (IT)
• GARDIN, Matteo
36060 Romano D'Ezzelino (VI) (IT)

(74) Representative: PGA S.p.A.
Via Mascheroni, 31
20145 Milano (IT)

(54) **BATTERY FOR A WORK APPARATUS AND A WORK APPARATUS COMPRISING SAID BATTERY**

(57) The present disclosure relates to a battery for gardening equipment, comprising a casing (2) that accommodates a plurality of electrochemical cells (3) configured to convert chemical energy into electrical energy. The cells are divided into two or more groups, each arranged along parallel axes (X). The battery includes a control unit (50) connected to each cell group and an electrical connection component (60) connecting the cell groups to the control unit. The electrical connection component (60) comprises two or more terminals (61), each dedicated to a group of cells, for partitioning the flow of current towards the control unit. The present disclosure also relates to a vehicle for the maintenance of land comprising at least one battery (1).

**(Cont. next page)**

EP 4 769 635 A1

FIG.3

**Description**

FIELD OF THE INVENTION

The object of the present invention is a battery for powering work equipment as well as work equipment comprising said battery, usable in the domestic, professional or industrial field to perform maintenance and/or construction activities. In particular, the equipment which is the object of the present invention can comprise lawnmowers, edge trimmers, lawnmower tractors, chainsaws, blowers, autonomous navigation vehicles, and other devices usable for the maintenance of plots of land or gardens, such as the mowing of grass and the pruning of plants and the cleaning of environments. The equipment can comprise a work vehicle, for example for gardening, with an operator on board or autonomously driven, such as a lawnmower tractor. The work equipment can further comprise large vehicles, such as agricultural and industrial vehicles, for example forklifts.

STATE OF THE ART

Modular systems comprising a plurality of battery modules, each containing a plurality of electrochemical cells connected through busbars, are known in the field of battery packs for electrically powered equipment. In such systems, the cells are arranged in groups electrically connected in series and/or in parallel to obtain the desired voltage and capacitance characteristics.

Document WO2024/052658A1 discloses a configuration comprising modules with cells arranged in groups connected in series, where a primary module provided with a monitoring unit detects the voltages also of the secondary modules connected in parallel by means of electrical interconnections that equate the potentials of the corresponding groups.

Such modular systems are managed by a central battery management unit (BMU) that coordinates the overall operation of the system. To allow the BMU to carry out its functions, the systems require local monitoring units arranged in each module or group of modules, which supervise the charge state and health of the cells. Monitoring the voltages of the individual cells or groups of cells and managing the charge balance therebetween require dedicated electronic circuits between the local monitoring units and the central battery management unit.

Although the solutions described above allow the monitoring and management of modular battery systems, the Applicant has noted that such solutions highlight limitations and drawbacks. In particular, such architectures are inefficient from an energy point of view due to power losses in the wired connections and in the monitoring circuits. Furthermore, the concentration of electronic circuitry and connections can cause localized overheating which can lead to system malfunctions or undesired battery discharge phenomena.

OBJECT OF THE INVENTION

Therefore, the object of the present invention is to solve at least one of the drawbacks and/or limitations of the previous solutions.

A first object of the present invention is to provide a compact battery, having reduced weight and dimensions, but at the same time reliable and able to maintain high performance over time, resisting demanding conditions of use.

A further object of the present invention is to provide a battery having a robust structure and easy to handle by the user.

It is further an object of the present invention to provide a battery that is efficient in the transmission of electrical energy, capable of preventing unwanted phenomena such as overheating.

It is further an object of the present invention to provide a highly versatile battery, suitable for use in various work equipment and designed to operate effectively even in unfavourable environmental conditions.

A further object of the present invention is to provide work equipment, for example for the maintenance of a garden, which is compact, robust and reliable.

These and other objects, which will appear more clearly from the following disclosure, are substantially achieved by a battery and work equipment in accordance with one or more of the appended claims.

SUMMARY

Aspects of the invention are described here below.

In a 1st aspect a battery is provided comprising:

- a casing (2),
- a plurality of electrochemical cells (3) housed in the casing (2) and configured to convert chemical energy into electrical energy, wherein said plurality of electrochemical cells (3) is divided into two or more groups, each of which comprises cells aligned along respective development axes (X) parallel to one another.

In a 2nd aspect according to the preceding aspect, the battery further comprises:

- a control unit (50) connected to each group of electrochemical cells of said plurality,
- an electrical connection component (60) connected to each group of electrochemical cells and to the control unit (50), configured to transfer electric current coming from the groups of cells to the control unit (50),

wherein the electrical connection component (60) comprises two or more terminals (61), each connected to a respective group of electrochemical cells for partitioning the flow of electric current directed towards the control unit (50).

In a 3rd aspect according to the preceding aspect, the electrical connection component (60) comprises a conductive plate (62), near a terminal end (69) of the casing (2).

In a 4th aspect according to any one of the preceding two aspects, the electrical connection component (60) comprises a conductive plate (62) extending along an extension direction (Y) transverse to the development axes (X).

In a 5th aspect according to the preceding aspect, said two or more terminals (61) are uniformly distributed along the extension direction (Y).

In a 6th aspect according to any one of the preceding four aspects, the electrical connection component (60) comprises a conductive plate (62) electrically connected to the terminals (61) for transferring, towards the control unit (50), electric currents with substantially uniform intensity.

In a 7th aspect according to the preceding aspect, the conductive plate (62) transfers electric current with uniform intensity at less than a deviation ($S_i$) in current intensity between a maximum electric current ($i_{max}$) and a minimum electric current ($i_{min}$) less than 10% of the maximum electric current ($i_{max}$),

In an 8th aspect according to the preceding aspect, the deviation ($S_i$) in current intensity between a maximum electric current ($i_{max}$) and a minimum electric current ($i_{min}$) is a function of the following formula:

$$S_i = \frac{i_{max} - i_{min}}{i_{max}} < 0.1$$

wherein:

- $i_{max}$ is the current output from the conductive plate (62) having maximum current intensity, and
- $i_{min}$ is the current output from the conductive plate (62) having minimum current intensity.

In a 9th aspect according to any one of the preceding 3rd to 8th aspects, the conductive plate (62) is shaped as a strip having a width that develops parallel to the development axes (X), a main extension in length along a direction parallel to the extension direction (Y) greater than the width.

In a 10th aspect according to the preceding aspect, the strip of the conductive plate (62) has a thickness that develops parallel to a defined plane of the development axes (X) and from the extension direction (Y), less than the width.

In a 10th-bis aspect according to any one of the 2nd to 10th aspects, the terminals (61) are power terminals through which an electric current passes that can be used to power a vehicle for the maintenance of land and gardens that can be connected to the battery.

In a 10th-ter aspect according to any one of the preceding 2nd to 10th-bis aspects, the control unit (50) is connected to the terminals (61) and is configured to electrically power a vehicle for the maintenance of land and gardens which can be connected to the battery, optionally the control unit (50) being configured to electrically power an electric motor of the vehicle for the maintenance of land and gardens.

In a 10th-quater aspect according to the preceding aspect, the control unit (50) comprises an electronic board (51) having an electric power management circuit configured to regulate an electric current coming from the electrochemical cells (3) intended to electrically power the vehicle for the maintenance of land and gardens.

In a 10th-quinquies aspect according to the preceding aspect, the power management circuit is configured to convert a direct current coming from said electrochemical cells (3) into a regulated direct current or into a regulated alternating current suitable to power an electric motor of the vehicle for the maintenance of land and gardens.

In a 10th-sexies aspect according to any one of the preceding aspects, the battery comprises a connector (30) connected to the control unit (50) and configured to power a vehicle for the maintenance of land and gardens that can be connected to the battery.

In an 11th aspect according to any one of the preceding aspects when dependent on the 2nd aspect, the number of said two or more electrical terminals (61) of the electrical connection component (60) is a function of the number of said two or more electrochemical cell groups (3).

In a 12th aspect according to the preceding aspect, a ratio of the number of electric terminals (61) to the number of electrochemical cell groups (3) is comprised between 0.2 and 0.5, optionally comprised between 0.3 and 0.4.

In a 13th aspect according to any one of the preceding aspects when dependent on the 2nd aspect, the electrical connection component (60) comprises at least three electrical terminals (61) which are spaced apart from each other and from a first and a second end (67a, 67b) of the conductive plate (62), opposite each other along the extension direction (Y).

In a 14th aspect according to any one of the preceding aspects when dependent on the 2nd aspect, said electrical terminals (61) have:

- a central terminal (61a) located in a central area of the conductive plate (62),
- two lateral terminals (61b) located laterally to the central terminal (61a).

In a 15th aspect according to the preceding aspect, the lateral terminals (61b) are equidistant from the central terminal (61a) and from a respective one of the first and second ends (67a, 67b) of the conductive plate (62).

In a 16th aspect according to any one of the preceding aspects, the conductive plate (62) has a width, measured parallel to the development axis (X) of the groups of cells, variable along the extension direction (Y).

In a 17th aspect according to any one of the preceding aspects, the conductive plate (62) has a plurality of junction zones (63) that can be connected to the electrochemical cells and having a greater width than secondary zones (64) interposed between two adjacent junction zones (63).

In an 18th aspect according to any one of the preceding aspects, a ratio between the width of the conductive plate (62) at the junction zones (63) and the width of the conductive plate (62) at the secondary zones (64) is comprised between 1.1 and 3,

In a 19th aspect according to any one of the preceding two aspects, the junction zones (63) of the conductive plate (62) comprise one or more junction zones located at a first and a second end (67a, 67b) of the conductive plate (62) opposite each other along the extension direction (Y).

In a 20th aspect according to any one of the preceding three aspects, the junction zones (63) of the conductive plate (62) comprise one or more junction zones located at each electrical terminal (61) of the electrical connection component (60).

In a 21st aspect according to any one of the preceding four aspects, the junction zones (63) of the conductive plate (62) comprise one or more junction zones located at an intermediate area (66) defined between two adjacent electrical terminals (61).

In a 21st-bis aspect according to any one of the 17th to 21st aspects, each junction zone (63) is sized to conduct electric currents comprised between 10A and 100A.

In a 22nd aspect according to any one of the 17th to 21st-bis aspects, the conductive plate (62) is delimited by a perimeter edge which, at each secondary zone (64), has a curvilinear section (68), optionally with an arc of circumference.

In a 23rd aspect according to the preceding aspect, the curvilinear section (68) has a concavity facing a central area of the battery.

In a 24th aspect according to any one of the preceding two aspects, said curvilinear section (68) is configured to promote the transit of electric current along the conductive plate (62), reducing the overheating of the same conductive plate (62).

In a 25th aspect according to any one of the preceding aspects, the electrical connection component (60) comprises a plurality of sheets (65) that constrain the conductive plate (62) to the electrochemical cells (3) of said plurality,

In a 26th aspect according to the preceding aspect when dependent on any one of the 17th to 24th aspects, the sheets (65) are located at a respective one of said junction zones (63) of the conductive plate (62).

In a 27th aspect according to any one of the preceding two aspects, the sheets (65) develop transversely to the conductive plate (62) of the electrical connection component (60), positioning the same conductive plate (62) above the electrochemical cells (3) of said plurality and defining a passage opening between the conductive plate (62) and the electrochemical cells (3) to electrically isolate the electrical terminals (61) from the same electrochemical cells (3),

In a 28th aspect according to any one of the preceding aspects, the electrochemical cells (3) belonging to each group are electrically connected in series.

In a 29th aspect according to any one of the preceding aspects, the electrochemical cells of each group have an incremental electric potential difference proceeding along the development axis (X) until a maximum electric potential difference is reached at one/the terminal end (69) of the casing (2) where the electrical connection component (60) is located.

In a 30th aspect according to the preceding aspect when dependent on the 27th or 28th aspect, the sheets (65) engage the conductive plate (62) to the electrochemical cells (3) having maximum electric potential difference.

In a 31st aspect according to any one of the preceding aspects when dependent on the 2nd aspect, the battery comprises a plurality of positive cables (P) connecting said two or more terminals (61) of the electrical connection component (60) to a same positive terminal (70a) of the control unit (50).

In a 32nd aspect according to the preceding aspect, a deviation ($S_{lp}$) in length between a positive cable (P) of maximum length ($L_{p\_max}$) and a positive cable (P) of minimum length ($L_{p\_min}$) is less than 10% of the maximum length ($L_{p\_max}$).

In a 33rd aspect according to the preceding aspect, the deviation ($S_{lp}$) is a function of the following formula:

$$S_{lp} = \frac{L_{p\_max} - L_{p\_min}}{L_{p\_max}} < 0.1$$

wherein:

- $L_{p\_max}$ is the maximum length of a positive cable (P), and
- $L_{p\_min}$ is the minimum length of a positive cable (P).

In a 34th aspect according to any one of the preceding three aspects, the positive cables (P) are in a number equal to said two or more terminals (61).

In a 35th aspect according to any one of the preceding four aspects, each positive cable (P) connects a respective terminal (61) to the positive terminal (70a) of the control unit (50).

In a 36th aspect according to any one of the preceding aspects, the battery comprises a secondary electrical connection component (60') connected to each group of electrochemical cells and to the control unit (50), configured to transfer electric current coming from the control unit (50) to each group of cells.

In a 37th aspect according to the preceding aspect, the secondary electrical connection component (60') comprises two or more additional terminals (61'), each connected to a respective group of electrochemical cells for partitioning the flow of electric current coming from the control unit (50).

In a 38th aspect according to any one of the preceding two aspects, the secondary electrical connection component (60') has an additional conductive plate (62') near a secondary terminal end (69') of the casing (2) opposite to the terminal end (69) where the conductive plate (62) of the electrical connection component (60) is located.

In a 39th aspect according to the preceding aspect, the additional conductive plate (62') is identical to the conductive plate (62) of the electrical connection component (60).

In a 40th aspect according to any one of the preceding three aspects, said two or more additional terminals (61') are uniformly distributed along the extension direction (Y).

In a 42nd aspect according to any one of the preceding five aspects, the secondary electrical connection component (60') comprises an additional conductive plate (62') electrically connected to the additional terminals (61') for transferring, from the control unit (50), electric currents with substantially uniform intensity.

In a 43rd aspect according to any one of the preceding six aspects, the additional conductive plate (62') transfers electric current with uniform intensity at less than one deviation ($S_i$) in current intensity between a maximum electric current ($i_{max}$) and a minimum electric current ($i_{min}$) less than 10% of the maximum electric current ($i_{max}$).

In a 44th aspect according to the preceding aspect, the deviation ($S_i$) in current intensity between a maximum electric current ($i_{max}$) and a minimum electric current ($i_{min}$) is a function of the following formula:

$$S_i = \frac{i_{max} - i_{min}}{i_{max}} < 0.1$$

wherein:

- $i_{max}$ is the current output from the conductive plate (62) having maximum current intensity, and
- $i_{min}$ is the current output from the conductive plate (62) having minimum current intensity.

In a 45th aspect according to any one of the preceding 38th to 44th aspects, the additional conductive plate (62') is shaped as a strip having a width that develops parallel to the development axes (X), a main extension in length along a direction parallel to the extension direction (Y) greater than the width.

In a 46th aspect according to the preceding aspect, the strip of the additional conductive plate (62') has a thickness that develops parallel to a defined plane of the development axes (X) and from the extension direction (Y), less than the width.

In a 47th aspect according to any one of the preceding 37th to 46th aspects, the number of said two or more additional electrical terminals (61) of the secondary electrical connection component (60') is a function of the number of said two or more electrochemical cell groups (3).

In a 48th aspect according to the preceding aspect, a ratio of the number of additional electric terminals (61') to the number of electrochemical cell groups (3) is comprised between 0.2 and 0.5, optionally comprised between 0.3 and 0.4.

In a 49th aspect according to any one of the preceding 37th to 48th aspects, the secondary electrical connection component (60') comprises at least three additional electrical terminals (61') which are spaced apart from each other and from a first and a second end (67a', 67b') of the additional conductive plate (62'), opposite each other along the extension direction (Y).

In a 50th aspect according to any one of the preceding 37th to 49th aspects, said additional electrical terminals (61') have:

- a central terminal (61a') located in a central area of the additional conductive plate (62'),
- two lateral terminals (61 b') placed laterally to the central terminal (61a') of the additional conductive plate (62').

In a 51st aspect according to the preceding aspect, the lateral terminals (61b') of the additional conductive plate (62') are equidistant from the central terminal (61a') of the additional conductive plate (62') and from a respective one of the first and second ends (67a', 67b') of the additional conductive plate (62').

In a 52nd aspect according to any one of the preceding 38th to 51st aspects, the additional conductive plate (62') has a width, measured parallel to the development axis (X) of the groups of cells, variable along the extension direction (Y).

In a 53rd aspect according to any one of the preceding 38th to 52nd aspects, the additional conductive plate (62') has a plurality of junction zones (63') that can be connected to the electrochemical cells and having a greater width than secondary zones (64) interposed between two adjacent junction zones (63') of the additional conductive plate (62').

In a 54th aspect according to the preceding aspect, a ratio between the width of the additional conductive plate (62') at the junction zones (63') and the width of the additional conductive plate (62') at the secondary zones (64) is comprised between 1.1 and 3,

In a 55th aspect according to any one of the preceding two aspects, the junction zones (63') of the additional conductive plate (62') comprise one or more junction zones located at a first and a second end (67a', 67b') of the additional conductive plate (62') opposite each other along the extension direction (Y).

In a 56th aspect according to any one of the preceding three aspects, the junction zones (63') of the additional conductive plate (62') comprise one or more junction zones located at each additional electrical terminal (61') of the secondary electrical connection component (60').

In a 57th aspect according to any one of the preceding four aspects, the junction zones (63') of the additional conductive plate (62') comprise one or more junction zones located at an intermediate area (66') of the additional conductive plate (62') defined between two adjacent additional electrical terminals (61').

In a 58th aspect according to any one of the 38th to 57th aspects, the additional conductive plate (62') is delimited by a perimeter edge which, at each secondary zone (64') of the additional conductive plate (62'), has a curvilinear section (68'), optionally with an arc of circumference.

In a 59th aspect according to the preceding aspect, the curvilinear section (68') of the additional conductive plate (62') has a concavity facing a central area of the battery.

In a 60th aspect according to any one of the preceding two aspects, said curvilinear section (68') of the additional conductive plate (62') is configured to promote the transit of the electric current along the additional conductive plate (62'), reducing the overheating thereof.

In a 61st aspect according to any one of the preceding aspects, the secondary electrical connection component (60') comprises a plurality of sheets that constrain the additional conductive plate (62') to the electrochemical cells (3) of said plurality,

In a 62nd aspect according to the preceding aspect when dependent on the 53rd aspect, the sheets are located at a respective one of said junction zones (63') of the additional conductive plate (62').

In a 63rd aspect according to any one of the preceding two aspects, the sheets develop transversely to the additional conductive plate (62') of the secondary electrical connection component (60'), positioning the same conductive plate (62') above the electrochemical cells (3) of said plurality and defining a passage opening between the additional conductive plate (62') and the electrochemical cells (3) to electrically isolate the additional electrical terminals (61') from the same electrochemical cells (3).

In a 64th aspect according to any one of the preceding 37th to 63rd aspects, the battery comprises a plurality of negative cables (N) connecting said two or more additional terminals (61') of the electrical connection component (60) to a same negative terminal (70b) of the control unit (50).

In a 65th aspect according to the preceding aspect, a deviation ($S_{ln}$) in length between a negative cable (N) of maximum length ($L_{n\_max}$) and a negative cable (N) of minimum length ($L_{n\_min}$) is less than 10% of the maximum length ($L_{n\_max}$).

In a 66th aspect according to the preceding aspect, the deviation ($S_{ln}$) is a function of the following formula:

$$S_{ln} = \frac{L_{n\_max} - L_{n\_min}}{L_{n\_max}} < 0.1$$

wherein:

- $L_{n\_max}$ is the maximum length of a negative cable (N), and
- $L_{n\_min}$ is the minimum length of a negative cable (N).

In a 67th aspect according to any one of the preceding three aspects, the negative cables (N) are in a number equal to said two or more additional terminals (61').

In a 68th aspect according to any one of the preceding four aspects, each negative cable (N) connects a respective additional terminal (61') to the negative terminal (70b) of the control unit (50).

In a 69th aspect according to any one of the preceding aspects, the battery comprises a network of busbars (79) configured to electrically connect the electrochemical cells of said plurality.

In a 70th aspect according to any one of the preceding aspects, the network of busbars (79) comprises two terminal busbars (75) engaged with electrochemical cells located at the terminal end(s) (67) of the casing (2) that are opposite along the development axis (X).

In a 71st aspect according to any one of the preceding two aspects, the network of busbars (79) comprises a plurality of central busbars (71) engaged to the remaining electrochemical cells (3) of said plurality.

In a 72nd aspect according to any one of the preceding two aspects, each terminal busbar (7) comprises:

- a plurality of terminal junction points (80) engaged to a respective electrochemical cell,
- a plurality of terminal connection bridges (81) extending transversely to the development axes (X), said terminal connection bridges (81) engaging adjacent terminal junction points (80) to electrically connect the respective electrochemical cells (3) in parallel.

In a 73rd aspect according to any one of the preceding two aspects, each central busbar (71) has a connection module (74) having:

- two junction points (72) that can be engaged to a respective electrochemical cell (3) and are aligned along the development axis (X) of said electrochemical cells (3),
- a main connection bridge (73) extending parallel to the development axis (X) to connect the junction points (72).

In a 74th aspect according to the preceding aspect, the connection module (74) electrically connects in series two electrochemical cells (3) of a same cell group.

In a 75th aspect according to any one of the preceding two aspects, each central busbar (71) comprises a plurality of connection modules (74) placed parallel to each other along respective development axes (X).

In a 76th aspect according to the preceding aspect, each connection module (74) connects electrochemical cells (3) belonging to a respective group of electrochemical cells.

In a 77th aspect according to any one of the preceding two aspects, each central busbar (71) comprises a plurality of secondary connection bridges (83) connecting together two junction points (72) belonging to adjacent connection modules (74).

In a 78th aspect according to the preceding aspect, each secondary connection bridge (83) connects two junction points (72) aligned along a/the extension direction (Y) transverse to the development axes (X).

In a 79th aspect according to any one of the preceding two aspects, each secondary connection bridge (83) electrically connects in parallel to adjacent connection modules (74).

In an 80th aspect according to any one of the preceding 71st to 79th aspects, the central busbars (71) of said plurality are side by side and spaced apart along a direction parallel to the development axes (X).

In an 81st aspect according to any one of the preceding 69th to 80th aspects, the network of busbars (79) lies on an ideal plane placed at an upper face (3a) of the electrochemical cells (3) of said plurality. In an 82nd aspect according to any one of the preceding aspects, the battery further comprises an auxiliary network of busbars (82) engaged with a lower face (3b) of the electrochemical cells (3) of said plurality.

In an 83rd aspect according to the preceding two aspects, the lower face (3b) of the electrochemical cells (3) being opposite the upper face (3a) with respect to a direction transverse to the ideal lying plane of the network of busbars (79).

In an 84th aspect according to any one of the preceding two aspects, the auxiliary network of busbars (82) comprises a plurality of auxiliary busbars (71') side by side and spaced apart along a direction parallel to the development axes (X).

In an 85th aspect according to the preceding aspect, the plurality of auxiliary busbars (71') are identical to the central busbars (71) of the network of busbars (79).

In an 86th aspect according to any one of the preceding two aspects, each auxiliary busbar (71') has a connection module (74') having:

- two junction points (72') that can be engaged to a respective electrochemical cell (3) and are aligned along the development axis (X) of said electrochemical cells (3),
- a main connection bridge (73') extending parallel to the development axis (X) to connect the junction points (72') of an auxiliary busbar (71').

In an 87th aspect according to the preceding aspect, each connection module (74') of a respective auxiliary busbar (71') electrically connects in series two electrochemical cells (3) of a same cell group. In an 88th aspect according to any one of the preceding four aspects, each auxiliary busbar (71') comprises a plurality of connection modules (74') placed parallel to each other along respective development axes (X).

In an 89th aspect according to the preceding aspect, each connection module (74) of a respective auxiliary busbar (71') connects electrochemical cells (3) belonging to a respective group of electrochemical cells.

In a 90th aspect according to any one of the preceding six aspects, each auxiliary busbar (71') comprises a plurality of secondary connection bridges (83') connecting together two junction points (72') belonging to adjacent connection modules (74') of respective auxiliary busbars (71').

In a 91st aspect according to the preceding aspect, each secondary connection bridge (83') of a respective auxiliary busbar (71'), connects two junction points (72') of respective connection modules (74') of the auxiliary busbar (71'), aligned along a/the extension direction (Y) transverse to the development axes (X).

In a 92nd aspect according to any one of the preceding two aspects, each secondary connection bridge (83') of the auxiliary busbar (71') electrically connects in parallel two adjacent connection modules (74') of respective auxiliary connection bars (71').

In a 94th aspect according to any one of the preceding 82nd to 92nd aspects, the network of busbars (79) is offset with respect to the auxiliary network of busbars (82) along the development axis (X).

In a 95th aspect according to any one of the preceding aspects, the electrochemical cells (3) are arranged alternately, with groupings of cells having a positive pole oriented in a first direction and further groupings of cells having a positive pole oriented in an opposite direction.

In a 96th aspect according to the preceding aspect, the network of busbars (79) is configured to electrically connect concordant poles of two adjacent electrochemical cells (3) along the development axis (X).

In a 97th aspect according to any one of the preceding two aspects, the auxiliary network of busbars (82) is configured to electrically connect discordant poles of two adjacent electrochemical cells (3) along the development axis (X).

In a 98th aspect according to any one of the preceding aspects, the electrochemical cells (3) of said plurality are configured to generate an overall potential difference comprised between 10V and 90V. In a 99th aspect according to any one of the preceding aspects, the electrochemical cells (3) are configured to generate an overall potential difference equal to 24V, 48V, 56V or 80V.

In a 100th aspect according to any one of the preceding aspects, the electrochemical cells (3) of said plurality are configured to deliver an electric current having an intensity greater than 20a/h.

In a 101st aspect according to any one of the preceding aspects, the electrochemical cells (3) of said plurality are configured to deliver an electric current having an intensity comprised between 25 A/h and 50 A/h.

In a 102nd aspect according to any one of the preceding aspects, the electrochemical cells (3) of said plurality are configured to deliver an electric current having an intensity comprised between 35A/h 45A/h.

In a 103rd aspect according to any one of the preceding aspects, the electrochemical cells (3) of said plurality are configured to generate a power comprised between 480W and 2.52kW.

In a 104th aspect according to any one of the preceding aspects, the electrochemical cells (3) of said plurality are configured to generate a power equal to 2.24kW.

In a 104th-bis aspect according to any one of the preceding aspects, the battery comprises a plurality of spacers (84c) interposed between the electrochemical cells (3) and configured to absorb heat dissipated by said electrochemical cells (3).

In a 104th-ter aspect according to the preceding aspect, each spacer of said plurality of spacers (84c) has a hollow body (90), optionally cylindrical or semi-cylindrical, defining a seat (91) inside which a single electrochemical cell (3) is housed.

In a 104th-quater aspect according to any one of the preceding two aspects, the spacers (84c) of said plurality are interconnected to form a three-dimensional reticular structure that individually wraps each electrochemical cell (3), optionally in which the reticular structure has a matrix conformation.

In a 104th-quinquies aspect according to any one of the preceding three aspects, the spacers of said plurality of spacers (84c) are made of a phase change material optionally comprising graphite.

In a 104th-sexies aspect according to the preceding aspect, the phase change material has a melting point comprised between 40°C and 60°C, optionally comprised between 48°C and 57°C, even more optionally equal to 52°C.

In a 104th-septies aspect according to any one of the preceding two aspects, the phase change material exhibits a latent heat of fusion greater than 180 J/g, optionally comprised between 180 J/g and 185 J/g.

In a 104th-octies aspect according to any one of the preceding three aspects, the phase change material exhibits anisotropic thermal conductivity.

In a 104th-nonies aspect according to the preceding aspect, the thermal conductivity of the phase change material in a distribution plane defined by the development axis (X) and the extension direction (Y) is greater than a thermal conductivity along a direction transverse to the distribution plane.

In a 104th-decies aspect according to any one of the preceding two aspects, the thermal conductivity of the phase change material in a/the distribution plane defined by the development axis (X) and the extension direction (Y) is comprised between 6 W/m·K and 10 W/m·K.

In a 104th-undecies aspect according to any one of the preceding two aspects, the thermal conductivity of the phase change material in a/the direction transverse to the distribution plane is comprised between 3 W/m·K and 5 W/m·K.

In a 104th-duodecies aspect according to any one of the preceding seven aspects, the phase change material is electrically insulating.

In a 104th-terdecies aspect according to any one of the preceding eleven aspects, each spacer (84c) of said plurality peripherally wraps a respective electrochemical cell (3).

In a 105th aspect, a land maintenance vehicle is included, in particular for cutting lawns or gardens, comprising:

- a support frame (101),
- a driving station (106) for an operator carried by the support frame (101),
- at least one work tool (102) carried below by said support frame (101) and configured to perform work on plots of land to be maintained,
- at least one command device (108), that can be operated by the operator in said driving station (106), to cause a movement of the vehicle,
- at least one right traction member (109a) and one left traction member (109b) carried by the support frame (101) and intended for the transmission of traction to the ground,
- at least one electric motor (105) coupled to the right traction member (109a) and to the left traction member (109b),
- at least one battery (1) in accordance with any one of the preceding aspects, configured to electrically power the electric motor (105).

In a 106th aspect according to the preceding aspect, the vehicle comprises a front compartment (107a) carried by the support frame (101) and located in front of the driving station (106), said front compartment (107a) defining a compartment for housing a plurality of batteries (1).

In a 107th aspect according to any one of the preceding two aspects, the vehicle comprises a rear compartment (107b) carried by the support frame (101) and located to the rear of the driving station (106), said rear compartment (107b) defining a compartment for housing a plurality of batteries (1).

BRIEF DESCRIPTION OF THE DRAWINGS

Some embodiments and aspects of the invention will be disclosed hereinafter with reference to the accompanying drawings, given merely for illustrative, non-limiting purposes in which:

- Figure 1 is a perspective view of a battery in accordance with the present disclosure;
- Figure 2 is an exploded perspective view of the battery of Figure 1;
- Figure 3 is a further exploded perspective view of the battery of Figure 1;
- Figures 4 and 5 are top views of the battery of Figure 1 in which a cover of a casing of the battery has been removed for illustrative purposes only,

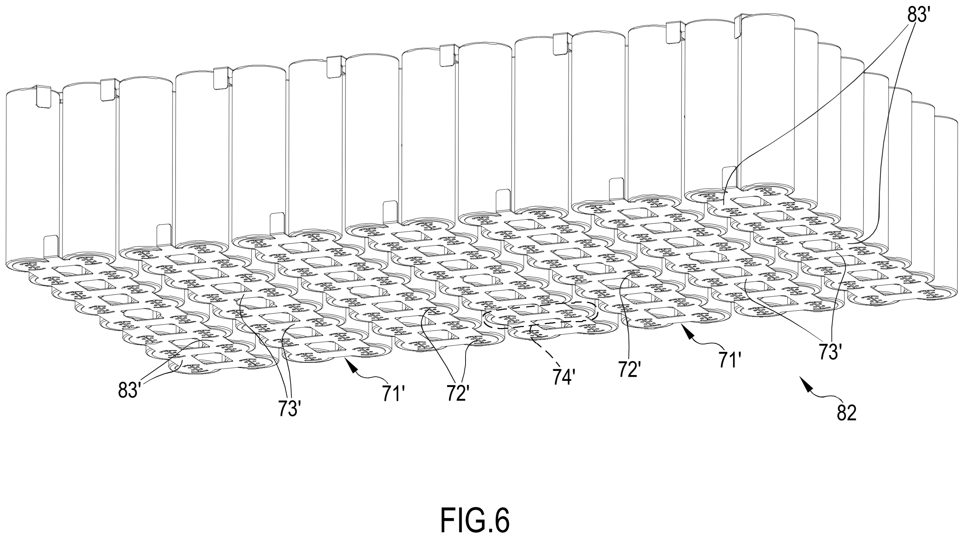

- Figure 6 is a bottom perspective view of the battery of Figure 1 in which a casing of the battery has been removed for illustrative purposes only,
- Figures 7A and 7B are top views of a detail of Figure 5;
- Figure 8 is a further perspective view of the battery of Figure 1 in which a casing of the battery has been removed, for illustrative purposes only,
- Figure 9 is a sectional side view of the battery of Figure 5 along the line IX-IX,
- Figures 10A and 10B are battery thermal simulations of the state of the art during operation,
- Figures 11A and 11B are thermal simulations of the battery in accordance with the present disclosure during operation,
- Figure 12 is a further thermal simulation of the battery in accordance with the present disclosure during operation,
- Figures 13 and 14 schematically show work equipment comprising a battery in accordance with the present disclosure,
- Figure 15 is a perspective view of a plurality of spacers for electrochemical cells of the battery of Figure 1,
- Figure 16 is an exploded perspective view of the battery of Figure 1 comprising the spacers of Figure 15.

DEFINITIONS AND CONVENTIONS

It should be noted that in the present detailed description, corresponding parts illustrated in the various

Figures are indicated with the same numerical references. The figures could illustrate the object of the invention through non-scale depictions; therefore, the parts and components illustrated in the figures related to the object of the invention could exclusively relate to schematic depictions.

The term *"work equipment"* means an instrument or tool that can be used by a user to carry out work in a domestic and/or professional environment. For example, the work equipment can comprise lawnmowers, edge trimmers, lawnmower tractors, forklifts.

The battery and/or work equipment/vehicle object of the present invention can comprise at least one control unit, indicated with reference numeral 50 in the attached drawings. The control unit is responsible for checking the operating conditions put in place by the battery and/or equipment itself. The control unit can be a single unit or be formed by a plurality of different control units depending on the design choices and operational needs.

*"Control unit"* means an electronic type component which can comprise at least one of: a digital processor (CPU), an analogue type circuit, or a combination of one or more digital processors with one or more analogue type circuits. The control unit can be "configured" or "programmed" to carry out certain steps: in practice, this can be accomplished by any means that allows the control unit to be configured or programmed. For example, in the case of a control unit comprising one or more CPUs and one or more memories, one or more programs can be stored in appropriate memory banks connected to the CPU(s); the program(s) contains instructions which, when executed by the CPU(s), program or configure the control unit to carry out the operations described in relation to the control unit. Alternatively, if the control unit is or comprises analogue circuitry, then the circuitry of the control unit can be designed to include circuitry configured, in use, to process electrical signals so as to carry out the steps related to the control unit.

Parts of the method described herein can be carried out by a data processing unit, or control unit, technically replaceable with one or more electronic computers designed to perform a portion of software program or firmware loaded on a memory medium. Such a software program can be written in any programming language of known type. Electronic computers, if in number equal to two or more, can be connected to each other by means of a data connection such that their computing powers are in any way shared; the same electronic computers can therefore even be installed in geographically different locations, creating a distributed computing environment through the aforementioned data connection.

The data processing unit, or control unit, can be a general purpose processor configured for performing one or more parts of the method identified in the present disclosure through the software or firmware program, or be a dedicated ASIC or processor or an FPGA, specifically programmed to perform at least part of the operations of the method described herein.

The memory medium can be non-transitory and can be internal or external to the processor, or control unit, or data processing unit, and can - specifically - be a memory geographically located remotely with respect to the electronic computer. The memory medium can also be physically divided into multiple portions, or in cloud form, and the software or firmware can provide portions stored on geographically divided portions of memory.

In the present disclosure, the control unit can define all or part of a battery management system (BMS). The BMS is configured to ensure the safety and efficiency of the battery. For example, the BMS can be configured to:

- monitor the voltage: check that the voltage of the cells remains within safe limits.
- manage charging and discharging: prevent overcharging and excessive discharging of the cells.
- balance cells: ensure that all cells have the same charge level.
- manage the temperature: monitor and adjust the temperature to avoid overheating or excessive cooling.

*"Electrochemical cell"* means the battery component configured to store and convert chemical energy into electrical energy. Each cell comprises:

- a negative electrode (anode) that releases electrons during discharging,
- a positive electrode (cathode) that accepts electrons during discharging,
- an electronic substance that allows the movement of ions between the anode and the cathode,
- a separator that prevents direct contact between anode and cathode, avoiding short circuits, but allowing the passage of ions.

DETAILED DESCRIPTION

**Battery**

Reference numeral 1 indicates a removable battery, which can be used on work equipment to power the motorization of the vehicle and on-board components. The work equipment can comprise a vehicle or tractor for the maintenance of land or gardens, or lawn mowers, edge trimmers, chainsaws, blowers, autonomous navigation vehicles and other devices that can be used for the maintenance of land or gardens, such as mowing grass and pruning plants and cleaning environments. However, the possibility of installing the battery on different types of equipment, such as forklifts, is not excluded. The battery object of the present disclosure can be a rechargeable battery having a charging capacity comprised between 2.5Wh and 40Wh. In an example, the battery 1 can be configured to generate an overall potential difference comprised between 10V and 90V, optionally equal to 24V, 48V, 56V and 80V. In greater detail, the battery 1 can be configured for delivering a current comprised between 5A and 60A.

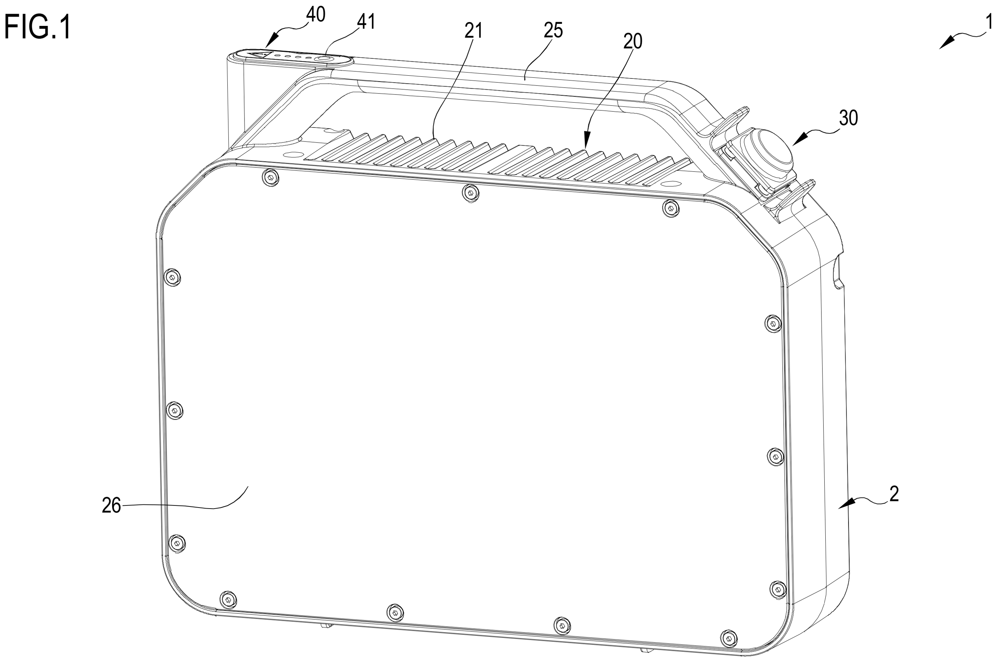

With reference to Figure 1, the battery is a portable component having a casing 2 inside which a plurality of electrochemical cells 3 are housed, configured to convert chemical energy into electrical energy to be used for powering the equipment or vehicle in which it will be installed.

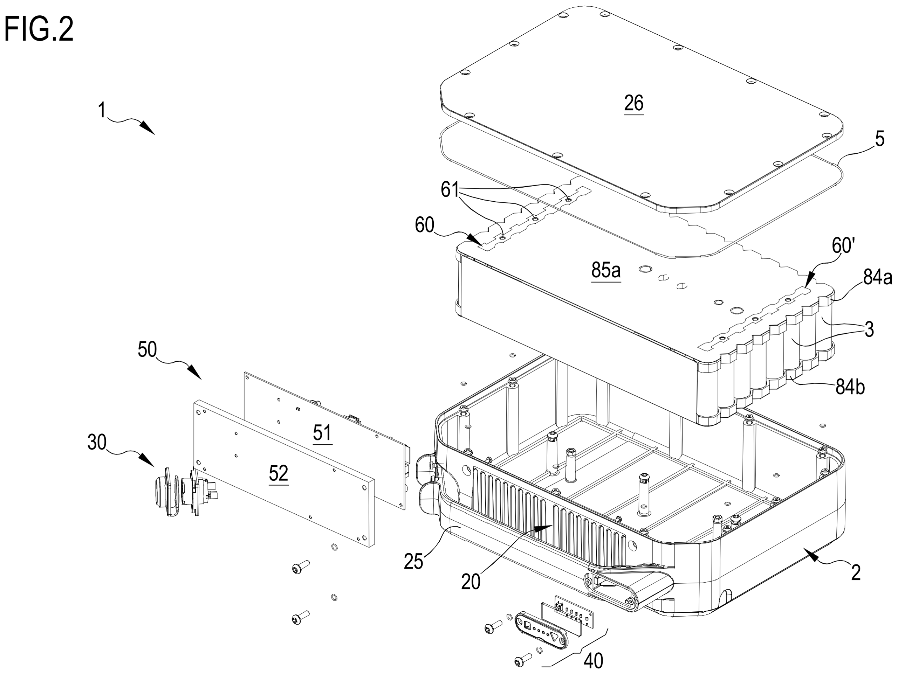

The casing 2 can comprise a shell 2a, which houses the electrochemical cells 3, and a cover 2b which closes the shell 2a laterally. As shown in Figure 2, the shell 2a has a hollow three-dimensional configuration, in which the electrochemical cells 3 are housed. The shell 2a of the casing 2 can also comprise a heat sink 20 provided with slats 21 arranged on the perimeter surfaces of the shell. Such surfaces abut an electronic board 51 of a control unit 50, configured to manage the charging and discharging operations of the cells, the balancing of potential differences between the cells and the control of the operating temperature of the cells. In an example shown in Figure 2, the electronic board 51 is engaged to the heat sink 20 by means of a plate 52 adapted to facilitate heat transfer between the same electronic board and the heat sink 20.

The shell 2a of the casing 2 can also comprise a plurality of threaded columns, the ends of which are positioned near an opening of the shell itself adapted to receive the cover 2b, thus allowing the fastening of the cover 2b to the shell 2a. The cover 2b can therefore comprise a flat panel which can be engaged with the threaded columns of the shell 2a.

Interposed between the shell 2a of the casing 2 and the cover 2b, the casing 2 can comprise a gasket 5 for fluid-tightly sealing the battery, preventing the passage of fluids inside the shell 2a where the electrochemical cells 3 are located.

As regards the materials, the casing 2 can be made entirely of aluminium. Alternatively, the shell 2a can be made of aluminium, while the cover 2b can be made of plastic material.

The battery can comprise a handle 25, integral with the casing 2 to facilitate gripping and transport by the user. Furthermore, the battery 1 can include a connector 30 positioned on the handle 25 and connected to the electronic board 51 of the control unit 50, by means of power cables M to allow the transmission of electrical signals in and/or out of the battery. The control unit 50 is electrically connected to the connector 30 and constitutes an electrical power delivery interface between the electrochemical cells 3 and the equipment or vehicle for the maintenance of land or gardens. In particular, the electric current coming from the electrochemical cells 3 transits through the control unit 50 before reaching, by means of the power cables M, the power connector 30 to be delivered to the equipment or vehicle for the maintenance of land and gardens. In other words, the connector 30 connects, by means of special wiring, the battery 1 to the vehicle in which it is installed, allowing to electrically power a motorization of the vehicle, for example an electric motor of a lawnmower, a brush cutter, a blower, a chainsaw, or other equipment for the maintenance of land and gardens, as well as any on-board components of the vehicle. When the battery is discharged, the connector 30 allows the battery to be recharged, connecting the vehicle or equipment to a power source, such as the mains. The battery can be provided with a control panel 40, positioned near an end of the handle opposite the connector 30 and configured to provide information relating to the operation of the battery. In an example, the control panel 40 can have a screen or a combination of LED indicators 41, configured to signal to the user the charge state of the electrochemical cells 3, any battery overheating conditions or anomalies such as non-conforming voltages or currents of the cells.

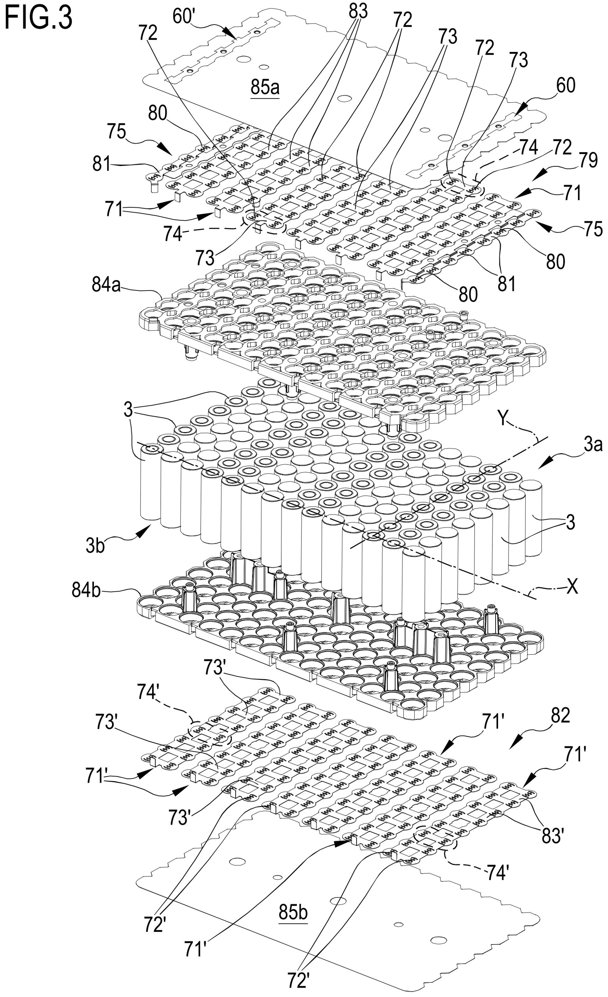

Turning to the description of the electrochemical cells 3, the battery has a plurality of cells configured to generate electrical energy for powering the vehicle on which it is installed. As illustrated in Figure 3, the electrochemical cells 3 are arranged in a matrix configuration, divided into two or more groups. Each group comprises cells aligned along respective development axes X, which are parallel to each other and define the rows of the matrix.

The electrochemical cells 3 belonging to each group are electrically connected in series, generating an incremental electric potential difference proceeding along the development axis X. This progression culminates in a maximum potential difference at a terminal end 69 of the casing 2, where an electrical connection component 60, disclosed below, is positioned that allows the electrical connection between the cells of each group and the electronic board 51 of the control unit 50.

Each cell belonging to a group can be aligned with a corresponding cell of an adjacent group along an extension direction Y, which is transverse, optionally, orthogonal to the development axes X. This alignment along the axis Y determines the columns of the matrix configuration. In the example illustrated in Figure 3, each group of cells contains fourteen cells aligned along the extension direction Y, giving rise to fourteen columns in the overall matrix. Furthermore, the battery can be configured with eight groups of cells arranged along the development axis X, determining eight rows in the matrix. As will be taken up later in the description, the electrochemical cells can be arranged alternating polarity, with groupings of cells having a positive pole oriented in a first direction, for example facing the cover 2b of the casing 2, and further groupings of cells having a positive pole oriented in an opposite direction, for example towards a bottom wall of the shell 2a of the casing, opposite the cover 2b. It should also be noted that, within each group of cells, the groupings can follow a predefined pattern in which two cells with concordant polarity (for example, both with the positive pole oriented in the same direction) are flanked by two other cells with opposite polarity (both with the positive pole oriented in the opposite direction).

This repeated pattern generates a central area in the overall matrix of the battery, delimited by two outer columns, positioned on opposite sides with respect to the centre of the matrix, which have polarities opposite each other.

The battery can also comprise a support for cells configured to define the three-dimensional arrangement of the cells in a matrix configuration, as previously described. The support for cells has two half-parts 84a and 84b made of insulating material, each configured to couple to the cells from opposite sides and subsequently join each other, forming a single unit. Each half-part 84a, 84b of the support has a plurality of cavities, corresponding to the number of electrochemical cells 3 of the battery, which are sized and shaped to allow the partial insertion of the cells, ensuring a stable fastening during assembly. The support for cells also allows maintaining a defined distance between the electrochemical cells, preventing them from coming into contact with each other. Such distance helps prevent unwanted contact, which could cause short circuits or electrical damage. In other words, the cavities of the first and second half-parts 84a, 84b of the support for cells are arranged so that the cells, once housed, are completely spaced apart from each other, creating an electrical insulation.

The two half-parts 84a, 84b of the support for cells are respectively coupled from a first direction, for example transverse to a distribution plane defined by the development axes X and the extension direction Y, and from an opposite second direction, thus grouping the cells together. The coupling between the two half-parts occurs by means of fastening components, such as joints, tabs or locking elements.

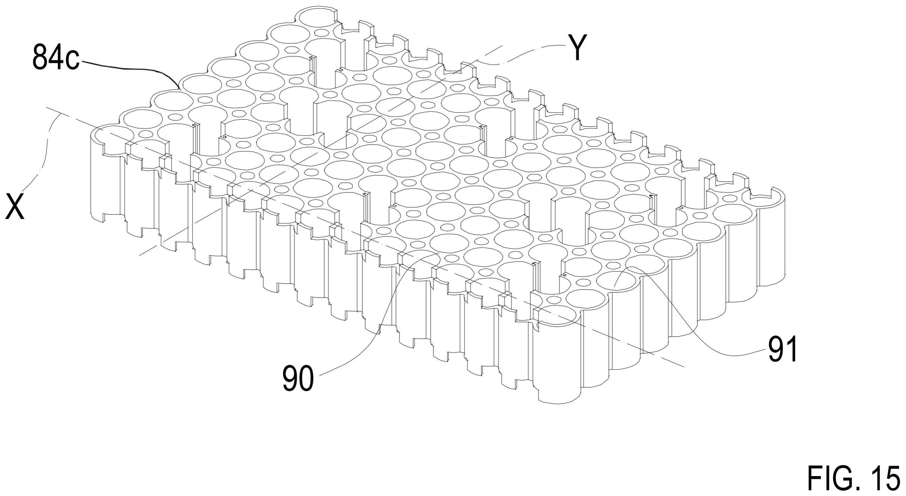

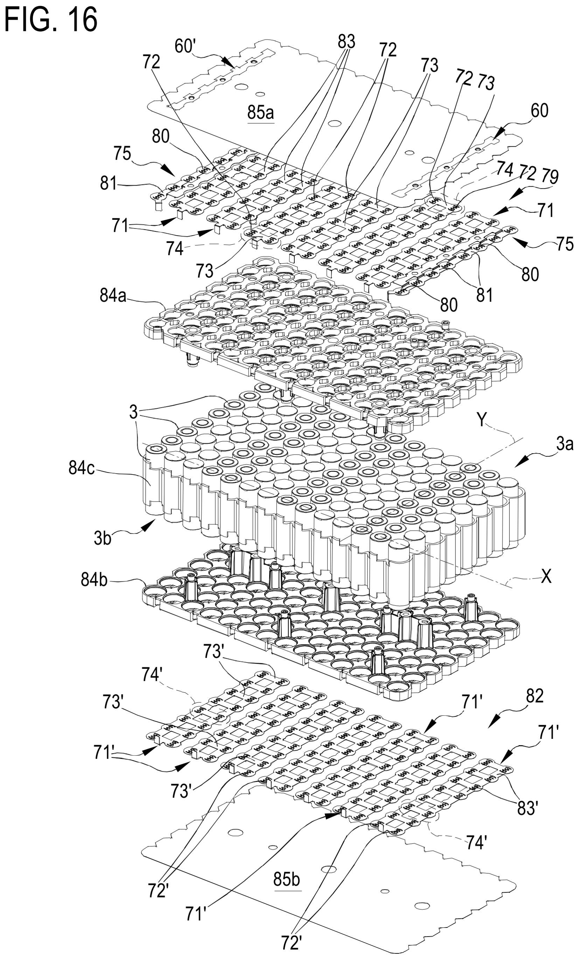

The battery 2 can also comprise a plurality of spacers 84c interposed between the electrochemical cells 3 and configured to absorb heat dissipated by said cells 3 during operation of the battery 2. As shown in Figures 15 and 16, each spacer 84c can have a hollow body 90 of substantially cylindrical or semi-cylindrical shape, which defines a seat 91 inside which a single electrochemical cell 3 is housed. The hollow body 90 develops transversely with respect to the distribution plane defined by the development axis X and the extension direction Y, peripherally wrapping the electrochemical cell 3 and surrounding the outer surface of the cell itself, as particularly visible in Figure 16.

The spacers 84c are interconnected to each other by connecting portions to form a three-dimensional reticular structure that individually wraps each electrochemical cell 3 of the battery 2. As highlighted in Figure 15, the reticular structure has a matrix conformation in which the hollow bodies 90 of the spacers 84c are arranged according to rows parallel to the development axis and according to columns parallel to the extension direction Y. The connecting portions between adjacent spacers 84c maintain the rigid reticular structure and allow the electrochemical cells 3 to be positioned in an orderly and stable manner inside the battery pack casing 2, while maintaining a predetermined distance between adjacent cells.

The plurality of spacers 84c can be made of a phase change material comprising graphite. The phase change material can have a melting point comprised between 40°C and 60°C, preferably comprised between 48°C and 57°C, even more preferably equal to 52°C.

The phase change material can also have a latent heat of fusion of greater than 180 J/g, preferably comprised between 180 J/g and 185 J/g. It should be noted how the high latent heat of fusion allows the spacers 84c to absorb a significant amount of heat energy without a substantial temperature increase occurring. Thereby, the spacers 84c operate as temporary thermal storage elements that stabilize the temperature of the electrochemical cells 3.

Furthermore, the phase change material can exhibit anisotropic thermal conductivity, i.e. different along different directions. In particular, the thermal conductivity of the phase change material in the distribution plane (defined by the development axis X and the extension direction Y) is greater than a thermal conductivity along a direction transverse to the distribution plane. In an example, the thermal conductivity in the distribution plane is comprised between 6 W/m·K and 10 W/m·K, while the thermal conductivity in the direction transverse to the distribution plane is comprised between 3 W/m·K and 5 W/m·K

The phase change material can be further electrically insulating, ensuring electrical insulation between adjacent electrochemical cells 3 and preventing accidental short circuits.

The battery can also comprise a main network of busbars 79 and an auxiliary network of busbars 82, configured to electrically connect the electrochemical cells 3 of the battery.

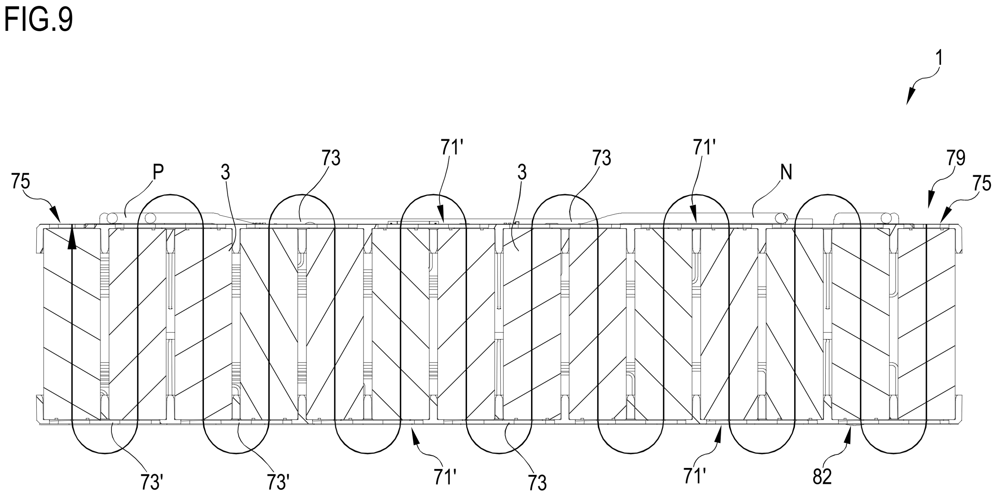

The main network of busbars 79 is positioned in an ideal plane at an upper face 3a of the electrochemical cells 3 facing the cover 2b of the casing 2, while the auxiliary network of busbars 82 is engaged with a lower face 3b of the electrochemical cells 3, which is opposite the upper face 3a with respect to a direction transverse to the ideal lying plane of the main network. As previously mentioned, the electrochemical cells 3 are arranged alternately, with groupings of cells having a positive pole oriented in a first direction and further groupings of cells with the positive pole oriented in the opposite direction, as illustrated in Figure 9. This alternating arrangement of the poles facilitates an optimal connection between the cells, exploiting both the network of busbars 79 and the auxiliary network of busbars 82. In an example, the network of busbars 79 is configured to connect concordant poles of two adjacent electrochemical cells 3 along the development axis X, establishing a connection in series between cells of identical polarity. Dually, the auxiliary network of busbars 82 connects discordant poles of two adjacent cells along the same development axis X, creating a complementary connection that guarantees the electrical continuity of the entire system. This configuration, visible in Figure 9, determines an offset between the network of busbars 79 and the auxiliary network of busbars 82 with respect to the development axis X. In particular, the connection of the electrochemical cells occurs by alternating the side of the face to which each network is engaged. If, for example, the first two cells of a group are connected on the upper face 3a by means of the network of busbars 79, the second cell will be simultaneously connected on the lower face 3b by means of the auxiliary network 82. Similarly, the third and fourth cells of the sequence will follow this alternation, with the third cell connected by the main network on the upper face 3a and the fourth connected by the auxiliary network on the lower face 3b. This offset allows to maintain a regular arrangement of the electrical connections between the cells, ensuring that each cell is connected respectively to concordant or discordant poles depending on the network engaged.

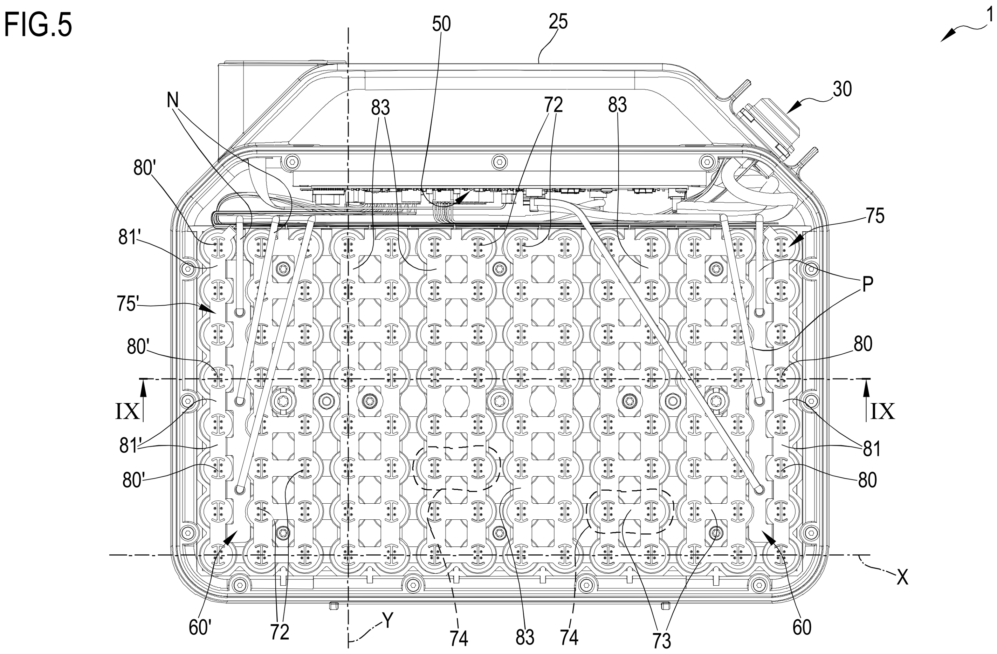

Turning now to analyse the structure of the network of busbars 79 as shown in Figures 3 and 5, it comprises two terminal busbars 75, positioned respectively at the opposite ends of the casing along the development axis X, and a plurality of central busbars 71, situated in the central part of the casing 2 to connect the remaining electrochemical cells.

The terminal busbars 75 are configured to electrically connect the cells placed at the ends of the battery. In other words, the terminal busbars 75 electrically connect in parallel the cells defining a respective terminal column of the matrix of electrochemical cells 3.

Each terminal busbar 75 comprises a series of terminal junction points 80, each of which is engaged to a respective electrochemical cell 3, interconnected to each other by a respective terminal connection bridge 81. In an example, each terminal busbar 75 can comprise a plurality of terminal connection bridges 81 that extend transversely with respect to the development axis X and have the function of connecting the adjacent terminal junction points together, creating an electrical connection in parallel between the cells.

The central busbars 71 instead have a modular structure that includes a series of connection modules 74 configured to connect in series two cells belonging to a same group of cells. In an example, each connection module 74 has two junction points 72, each engaged to a respective electrochemical cell aligned along the development axis X, and by a main connection bridge 73 that extends parallel to the development axis X. In particular, the main connection bridge 73 connects the two junction points 72, allowing the connection module to make a series connection between two electrochemical cells belonging to the same group.

The arrangement of the central busbars 71, visible in Figure 3, envisages that the connection modules 74 are placed parallel to each other along the development axes X of a respective group of cells, each of which electrically connects in series electrochemical cells of a respective group. In addition to the main connection bridges 73, the central busbars also include secondary connection bridges 83, which serve to connect the junction points 72 of adjacent connection modules. In an example, the secondary connection bridges 83 extend parallel to the extension direction Y, transverse to the development axes X, and make an electrical connection in parallel between two junction points 72 belonging to adjacent connection modules 74, aligned parallel to the extension direction Y. Each junction point 72 of a connection module 74 is engaged to a junction point 72 of an adjacent connection module 74 by means of a respective secondary connection bridge 83.

As shown in Figure 5, the central busbars are side by side and spaced apart along a direction parallel to the development axes X. This overall configuration determines an orderly distribution of the electric current between the cells, improving the efficiency of the system.

As regards the auxiliary network of busbars 82, this comprises, as shown in Figure 3, a plurality of auxiliary busbars 71' identical to the central busbars 71 of the network of busbars 79. The auxiliary busbars 71' also have a modular structure that includes a series of connection modules 74' configured to connect in series two cells belonging to a same group of cells. In an example, each connection module 74' of the auxiliary busbars 71' has both two junction points 72', each engaged to a respective electrochemical cell aligned along the development axis X, and a main connection bridge 73' of the auxiliary busbars 71' that extends parallel to the development axis X. In particular, the main connection bridge 73' of the auxiliary busbars 71' connects the two junction points 72' of the same auxiliary busbars 71', allowing the connection module to make a series connection between two electrochemical cells belonging to the same group.

The arrangement of the auxiliary busbars 71' envisages that the connection modules 74' thereof are placed parallel to each other along the development axes X of a respective group of cells, each of which electrically connects in series electrochemical cells of a respective group. In addition to the main connection bridges 73', the auxiliary busbars 71' also include secondary connection bridges 83', which serve to connect the junction points 72' of the auxiliary busbars 71' of adjacent connection modules. In an example, the secondary connection bridges 83' of the auxiliary busbars 71' extend parallel to the extension direction Y, i.e. transversely to the development axes X, making an electrical connection in parallel between two junction points 72' belonging to adjacent connection modules 74' of the auxiliary busbars 71', aligned parallel to the extension direction Y. Each junction point 72' of a connection module 74' of the auxiliary busbars 71' is engaged to a junction point 72' of an adjacent connection module 74' of the same auxiliary busbars 71', by means of a respective secondary connection bridge 83' of the auxiliary busbars 71'.

It should be noted how the structural configuration of the network of busbars 79 and of the auxiliary network of busbars 82 disclosed above not only guarantees an orderly arrangement of the electrical connections, but promotes an even distribution of the electrical loads along the entire structure of the battery. This configuration contributes to a more uniform dissipation of the heat generated during operation, enhancing the overall performance and operational safety of the system.

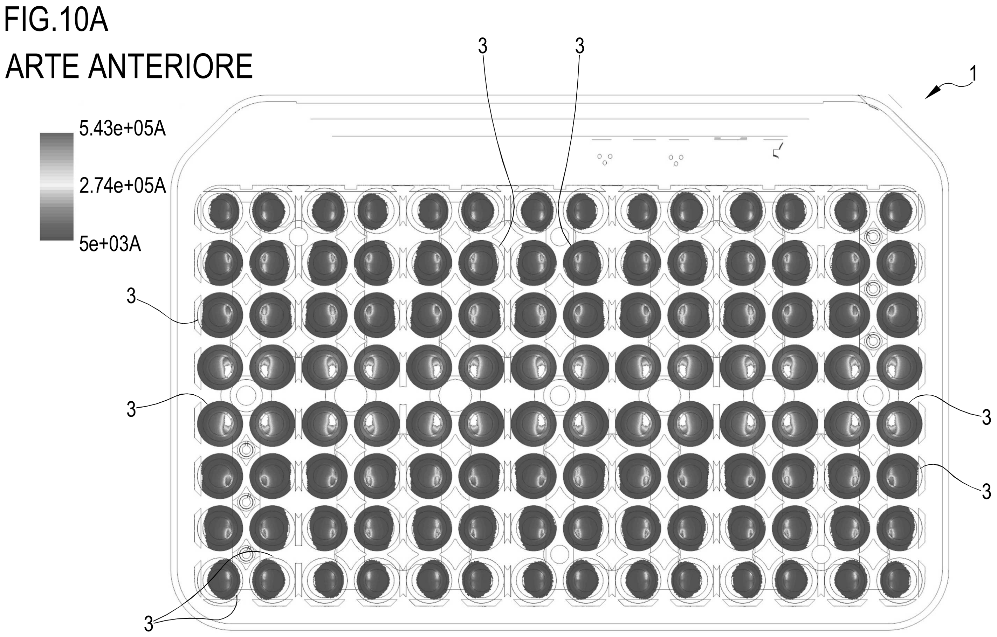

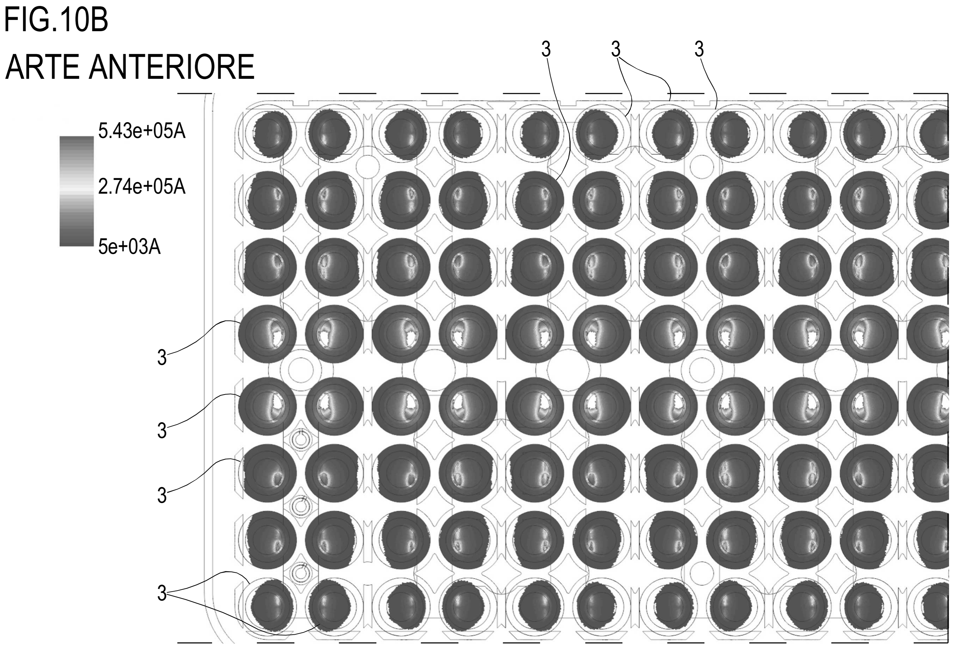

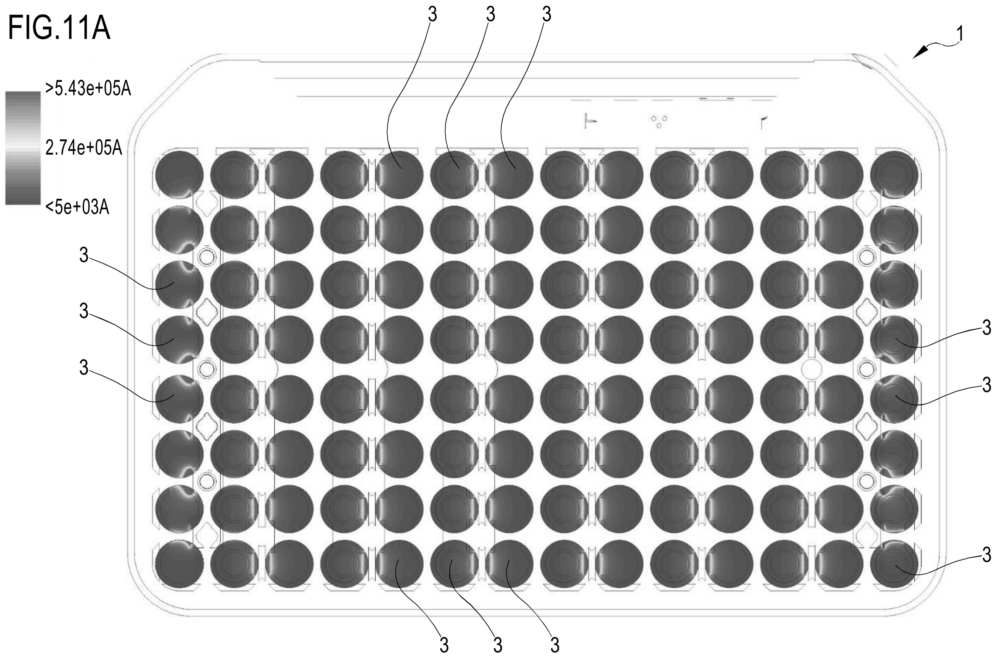

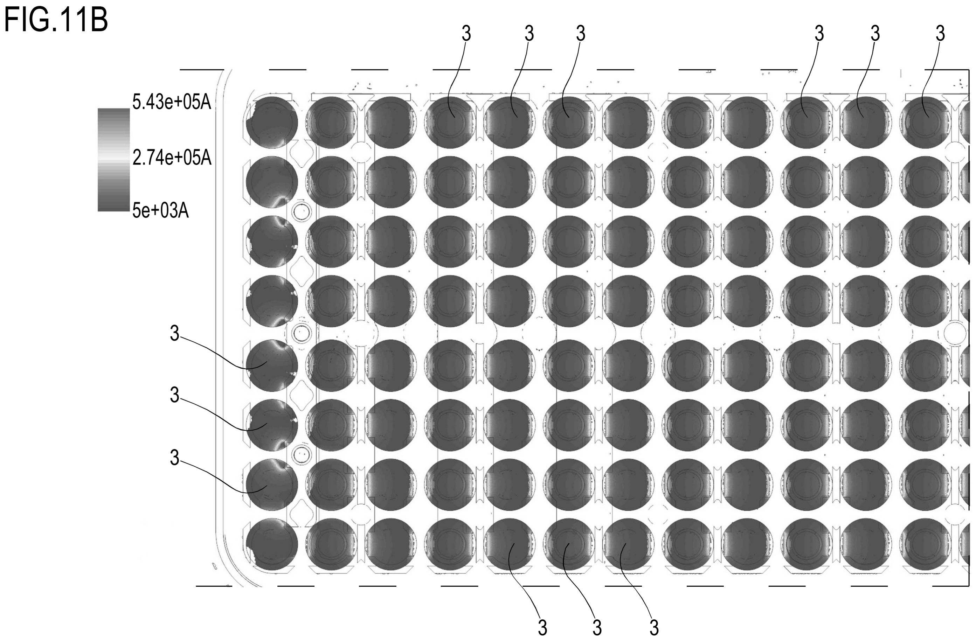

The effectiveness of this configuration has been verified by operating simulations, illustrated in Figures 10A, 10B, 11A and 11B. Figure 10A shows a simulation of the operation of the battery in which overheating zones of the central cells are highlighted in the figure by means of a light colour. These critical areas are located at the regions where the current transfer occurs towards a conductive plate for the collection of energy destined for the control unit 50. Figure 10B, which represents an enlargement of Figure 10A focused on the central cells, highlights a progressively decreasing concentration of currents proceeding away from such central cells. This behaviour confirms how a non-optimized configuration can cause significant imbalances in current distribution and generate localized areas of overheating, compromising battery efficiency.

In contrast, Figure 11A illustrates a simulation performed with the disclosed configuration of networks of busbars 79 and auxiliary networks of busbars 82 in accordance with the present disclosure. In this configuration, the energy dissipation of the current is uniform throughout the battery cells, reducing the risks of thermal concentration and improving the operational efficiency of the battery. Figure 11B, which depicts a detail of Figure 11A, highlights the uniformity of current dissipation between the cells, confirming the ability of this configuration to effectively balance electrical flow.

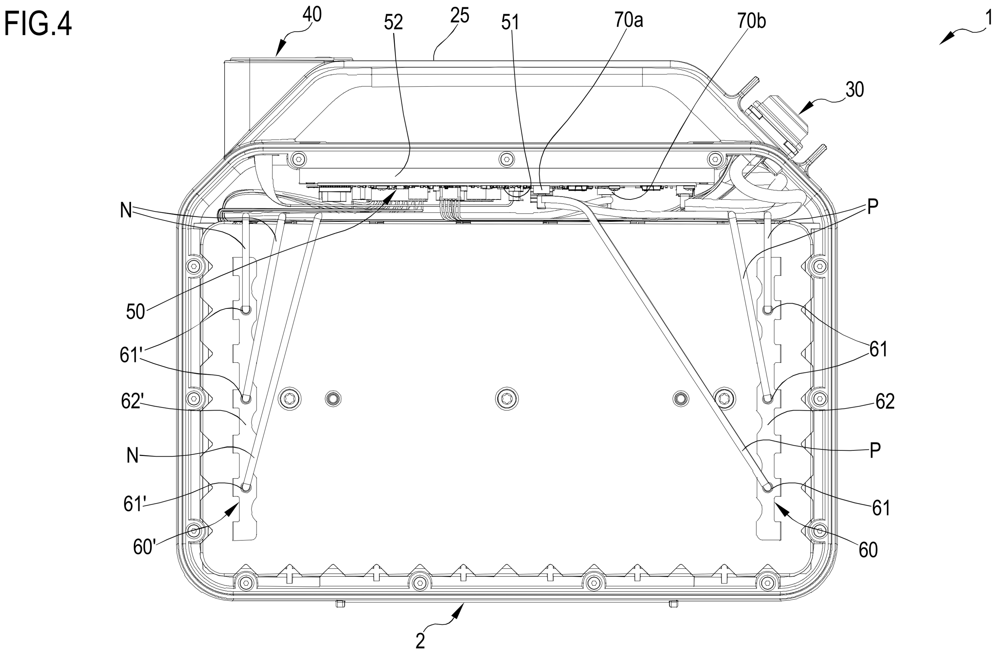

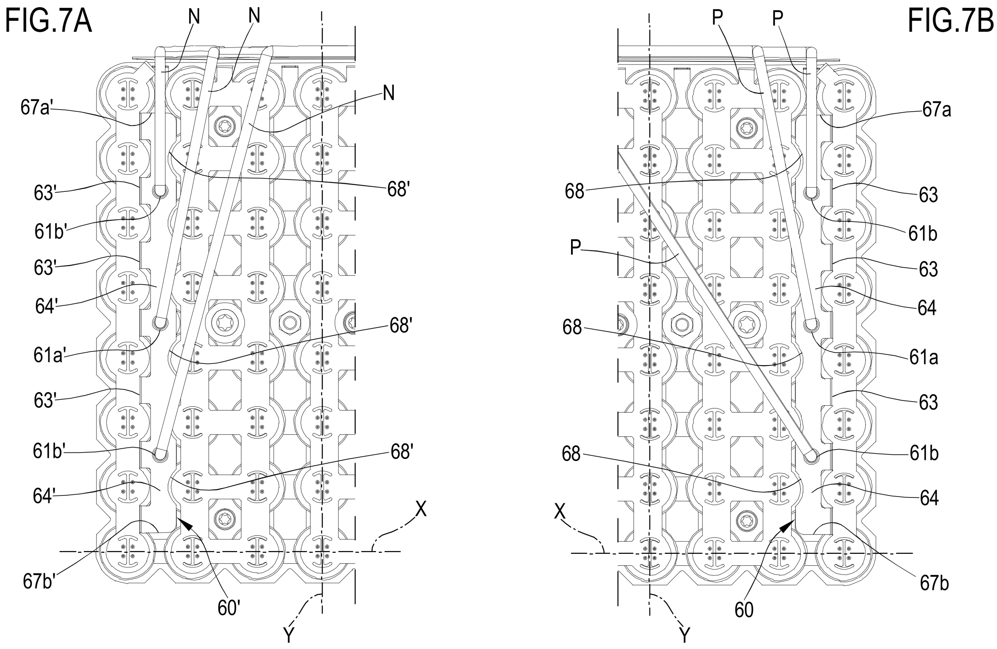

Now with reference to Figures 4, 5, 7A and 7B, the battery comprises an electrical connection component 60 useful for transferring electric current from the groups of electrochemical cells 3 to the control unit 50. In an example, the electrical connection component 60 has a conductive plate 62 made of high electrical conductivity material and configured to optimize current transfer, reducing energy losses and overheating. The conductive plate 62 extends along an extension direction Y transverse to the development axes X of the groups of cells and is located near a terminal end 69 of the casing 2 where the electrochemical cells 3 having maximum potential difference are located.

The conductive plate 62 comprises two or more terminals 61, each of which is connected to a respective group of electrochemical cells. The terminals 61 are configured as power terminals sized to conduct the main electric current coming from the electrochemical cells 3 and directed towards the control unit 50 to power the vehicle for the maintenance of land and gardens. The terminals 61 also allow to partition the flow of electric current coming from the different groups of electrochemical cells 3, ensuring a balanced distribution of the current delivered for the power supply of the vehicle. The arrangement of the terminals 61 along the extension direction Y is uniform, with at least three terminals, of which a central one 61a and two lateral ones 61b, equidistant from both the central terminal 61a and from opposite ends 67a, 67b of the conductive plate 62.

The conductive plate 62 has a variable width, measured parallel to the development axes X of the groups of cells. In an example, the conductive plate 62 can have a plurality of junction zones 63 where the plate electrically connects to the electrochemical cells, having a greater width than secondary zones 64 interposed between two adjacent junction zones 63. This configuration, characterized by a ratio between the width in the junction zones and that in the secondary zones comprised between 1.1 and 3, involves an optimization of the current flow, while reducing the thermal dissipation.

The junction zones 63 of the conductive plate 62 are located at specific areas of the same conductive plate 62 at:

- opposite ends 67a, 67b of the conductive plate,
- each electrical terminal 61, and
- intermediate areas 66 defined between two adjacent terminals 61.

To further promote current flow, a perimeter edge of the conductive plate 62 has curvilinear sections 68 at the secondary zones 64. In particular, the curvilinear sections 68 are configured as an arc of circumference, having a concavity facing the centre of the battery that contributes to reducing overheating during operation, optimising the dissipation of the heat generated.

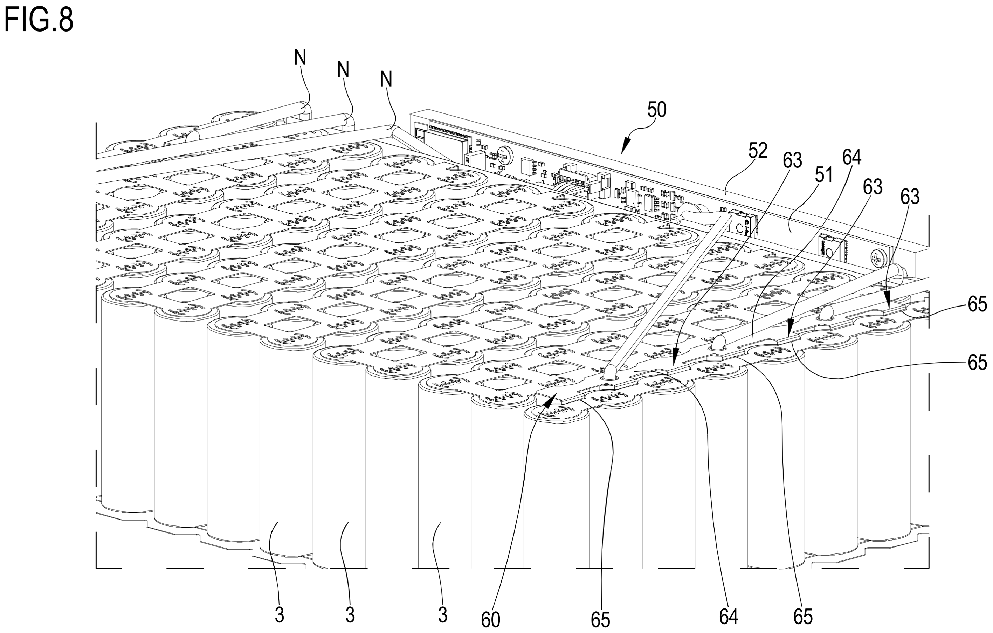

With reference to Figure 8, it should be noted that the electrical connection component 60 is supported by a plurality of sheets 65 that constrain the conductive plate 62 at a respective junction zone 63, to the electrochemical cells 3 having maximum potential difference. The sheets 65 develop transversely to the conductive plate 62, positioning it above the cells and defining a passage opening between the conductive plate and the cells themselves. Such a passage opening has a dual function: to ensure electrical insulation between the terminals 61 and the electrochemical cells 3 and to improve thermal dissipation, favouring greater efficiency and operational safety of the system. In an embodiment variant of the battery shown for example in Figure 3, the battery can also comprise an insulating layer 85a between the upper surface 3a of the electrochemical cells and the conductive plate 62 to increase the electrical insulation between the same conductive plate 62 and the cells 3.

With reference for example to Figure 4, the battery can comprise a plurality of positive electrical connection cables P configured to connect the terminals 61 of the electrical connection component 60 to a positive terminal 70a of the electronic board 51 of the control unit 50. Such cables are configured to ensure a stable and efficient transfer of the electric current coming from the groups of electrochemical cells 3 to the control unit 50, ensuring a balance of the electrical flow. In an example, the positive cables P connect a respective terminal 61 of the conductive plate 62 to the positive terminal 70a. The number of positive cables P is equal to the number of terminals 61, allowing a balanced partition of the current flowing from the conductive plate 62 to the control unit 50. This configuration allows avoiding power concentrations and contributes to a uniform and safe management of power transfer. In this context, the positive cables P have substantially equal lengths with a maximum variation of less than 10%. This uniformity in length minimizes significant differences in the electrical resistances of the cables, reducing load non-uniformities and enhancing overall system efficiency. The battery can also comprise a secondary electrical connection component 60' designed to transfer electric current from the control unit 50 to the groups of electrochemical cells 3, ensuring a balanced and controlled distribution of the current in input. The secondary electrical connection component 60' has an additional conductive plate 62', configured similarly to the conductive plate 62 of the previously described electrical connection component 60, but positioned near a secondary terminal end 69' of the casing 2, opposite the terminal end 69 where the conductive plate 62 is located with respect to the development axis X.

The additional conductive plate 62' extends parallel to the extension direction Y and comprises two or more additional terminals 61', each of which is connected to a respective group of electrochemical cells 3, configured to partition the flow of electric current coming from the control unit 50 and distribute it evenly between the groups of electrochemical cells. The arrangement of the additional terminals 61' along the extension direction Y is uniform, with at least three terminals, of which a central one 61a' and two lateral ones 61b', equidistant from both the central terminal 61a' and from opposite ends 67a', 67b' of the additional conductive plate 62'.

It should be noted that the additional terminals 61' are power terminals sized to conduct an electric current coming from the control unit 50 and directed towards the electrochemical cells 3. The additional terminals 61' also allow partitioning the flow of electric current coming from the control unit 50 and distributing it evenly between the different groups of electrochemical cells 3, ensuring a balanced distribution of the current during the charging or powering operations of the vehicle or equipment for the maintenance of land and gardens.

The additional conductive plate 62' has a variable width, measured parallel to the development axes X of the cell groups. In an example, the additional conductive plate 62' can have a plurality of junction zones 63' where the plate is electrically connected to the electrochemical cells, having a greater width than secondary zones 64' of the additional conductive plate 62' interposed between two adjacent junction zones 63' of the same additional conductive plate 62'. This configuration, characterized by a ratio between the width in the junction zones and that in the secondary zones comprised between 1.1 and 3, involves an optimization of the current flow, while reducing the thermal dissipation.

The junction zones 63' of the additional conductive plate 62' are located at specific areas of the same additional conductive plate 62' at:

- opposite ends 67a', 67b' of the additional conductive plate 62',
- each additional electrical terminal 61', and
- intermediate areas 66' of the additional conductive plate 62' defined between two adjacent additional terminals 61'.

To further promote the flow of current, a perimeter edge of the additional conductive plate 62' has curvilinear sections 68' at the secondary zones 64' of the additional conductive plate 62'. In particular, the curved sections 68' are configured as an arc of circumference, having a concavity facing the conductive plate 62 located near the terminal end 69.

Similarly to the electrical connection component 60, the secondary electrical connection component 60' is also supported by a plurality of sheets that constrain the additional conductive plate 62' at a respective junction zone 63' of the same additional conductive plate 62', to the electrochemical cells 3 having a minimum potential difference. The sheets 65' of the additional conductive plate 62' develop transversely to the additional conductive plate 62', positioning it above the cells and defining a passage opening between the conductive plate and the cells themselves. In an embodiment variant of the battery shown for example in Figure 3, the battery can comprise an insulating layer 85b between the lower surface 3b of the electrochemical cells and the conductive plate 62 to increase the electrical insulation between the same additional conductive plate 62' and the cells 3.

The connection between the additional terminals 61' of the additional conductive plate 62' and the control unit 50 is made by a plurality of negative cables N that connect a respective additional terminal 61' to a negative terminal 70b of the electronic board 51 of the control unit 50 (Figure 4). The number of negative cables N is equal to the number of additional terminals 61', ensuring a direct and balanced flow of current to each group of cells. The negative cables N are designed to have a uniform length, with a maximum variation of less than 10%, minimizing the differences in resistance between the cables.

This dual configuration, which sees the joint use of the electrical connection component 60 and the secondary electrical connection component 60', allows an optimal management of the bidirectional electric current transfer between the control unit 50 and the electrochemical cells 3.

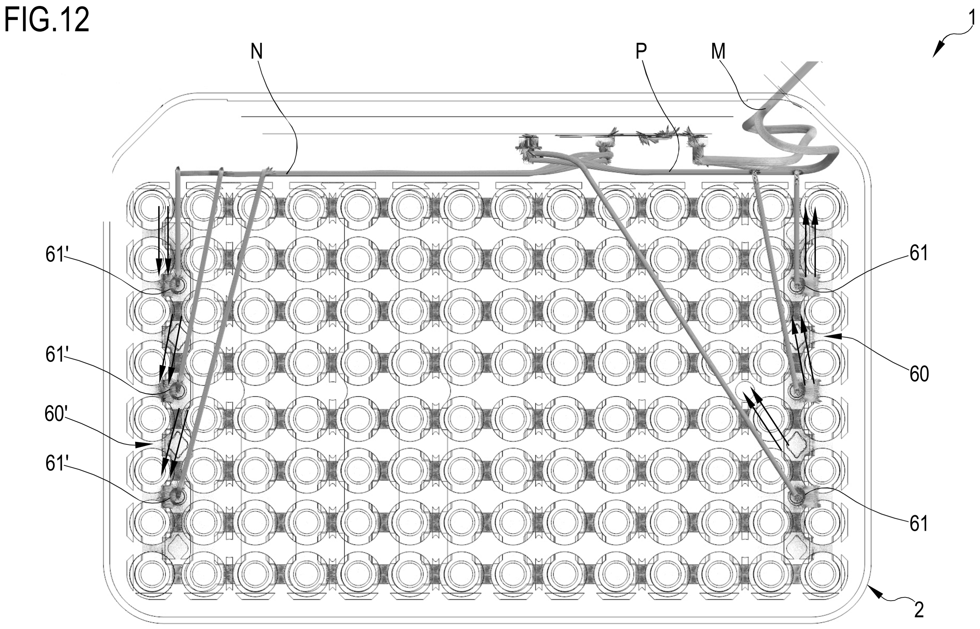

The configuration of the battery, which includes the conductive plate 62 and the additional conductive plate 62', has been subjected to thermal simulations to analyse the behaviour in the dissipation of heat during the transfer of electric current to and from the control unit 50. The results, shown in Figure 12, highlight a uniform heat dissipation profile in the areas surrounding the terminals 61 and the additional terminals 61'. In particular, the thermal simulations highlighted that the areas surrounding the terminals 61 and the additional terminals 61' are characterized by grey areas of uniform hue, confirming the uniformity in heat dissipation.

The simulation showed that the heat distribution along the conductive plate 62 and the additional conductive plate 62' is positively influenced by the variable geometry of the plates themselves. In particular, the junction zones 63 and the additional junction zones 63', located at the terminals, act as heat sinks, allowing an effective thermal transfer to the surrounding environment. Furthermore, the curved sections 68 present at the edges of the plates promote the uniform flow of current, reducing electrical resistance peaks and, consequently, localized heating.

The simulations further highlighted that the positioning of the conductive plate 62 and the additional conductive plate 62' at the opposite edges of the battery casing 2 contributes to a further reduction of the thermal gradients along the overall structure. This design allows an orderly and symmetrical thermal flow, with a uniform dispersion of the heat generated both during the transfer of current from the terminals 61 to the control unit 50, and during the transfer of current from the additional terminals 61' towards the electrochemical cells 3.

Thanks to this configuration, the thermal efficiency of the battery is significantly improved with respect to traditional configurations. The uniform heat distribution minimizes the risks of local overheating, which could compromise the integrity and life of the electrochemical cells, while increasing battery life. As previously disclosed, the dual configuration involving the use of the electrical connection component 60 (with terminals 61 and positive cables P) and of the secondary electrical connection component 60' (with additional terminals 61' and negative cables N) allows an optimal management of the transfer of electric current between the control unit 50 and the electrochemical cells 3. The positive cables P converge to the positive terminal 70a of the electronic board 51, while the negative cables N converge to the negative terminal 70b of the same electronic board 51, electrically connecting all the groups of electrochemical cells 3 with the control unit 50.

It should be noted that the control unit 50 carries out a role of electric current supply interface between the battery module 1 and the vehicle or equipment for the maintenance of land or gardens.

In this context and as previously disclosed, the terminals 61 and the additional terminals 61' are configured as power terminals through which a current for powering the vehicle transits.

The electronic board 51 of the control unit 50 can comprise an electric power management circuit configured to regulate the delivery of current to the user vehicle. Such a management circuit is interposed between the terminals 70a and 70b, where the positive cables P and the negative cables N converge respectively, and the power supply cables M that conduct the current towards the connector 30. The management circuit can comprise a micro-controller or a microprocessor implementing control algorithms for adjusting the current delivered as a function of different operating parameters.

In an example, the power management circuit is configured to convert the electric current coming from the electrochemical cells into a regulated direct current or into a regulated alternating current suitable for powering an electric motor of the vehicle or equipment for the maintenance of land and gardens.

In a first operating mode, the power management circuit is a DC-DC converter configured to provide a direct current by adjusting the voltage and/or current in input. Such a conversion can be carried out by means of circuitry dedicated to raising or lowering the voltage.

In a second operating mode, the power management circuit is an inverter configured to convert the direct current from the electrochemical cells 3 into alternating current, for example by means of a bridge of transistors, optionally in H-bridge configuration, which switch according to a controlled sequence to generate an alternating voltage waveform.

The connector 30 is electrically connected to the output of the power management circuit of the electronic board 51 by means of power cables M which are optionally sized to conduct electric currents without causing excessive overheating or significant voltage drops that would reduce the efficiency of the system.

## Land maintenance vehicle

A further object of the present invention is a vehicle 100 for the maintenance of land, for example configured for cutting a lawn, a garden or an agricultural plot of land.

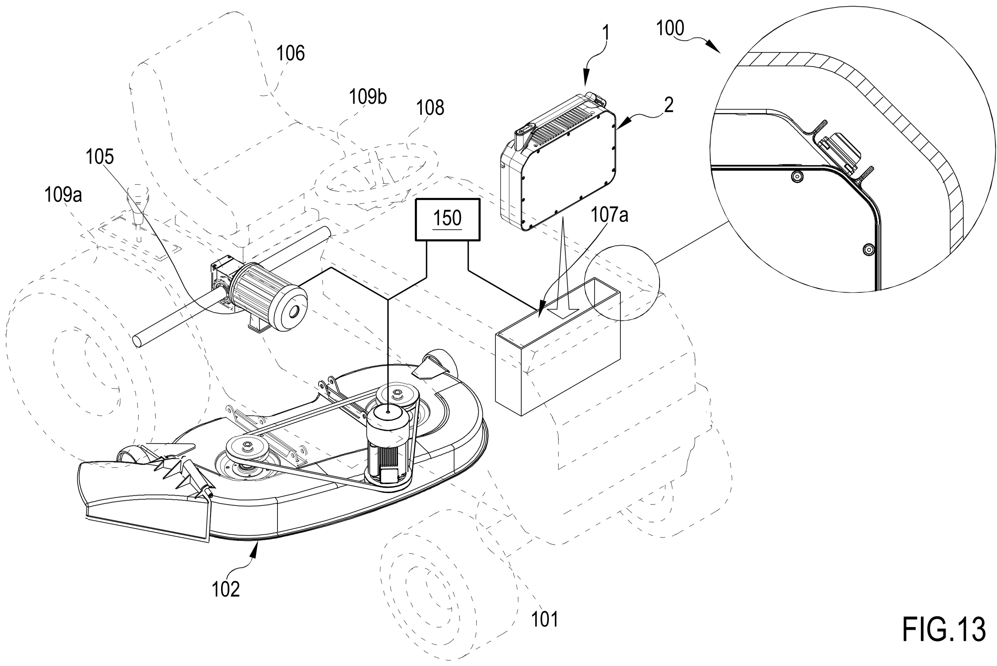

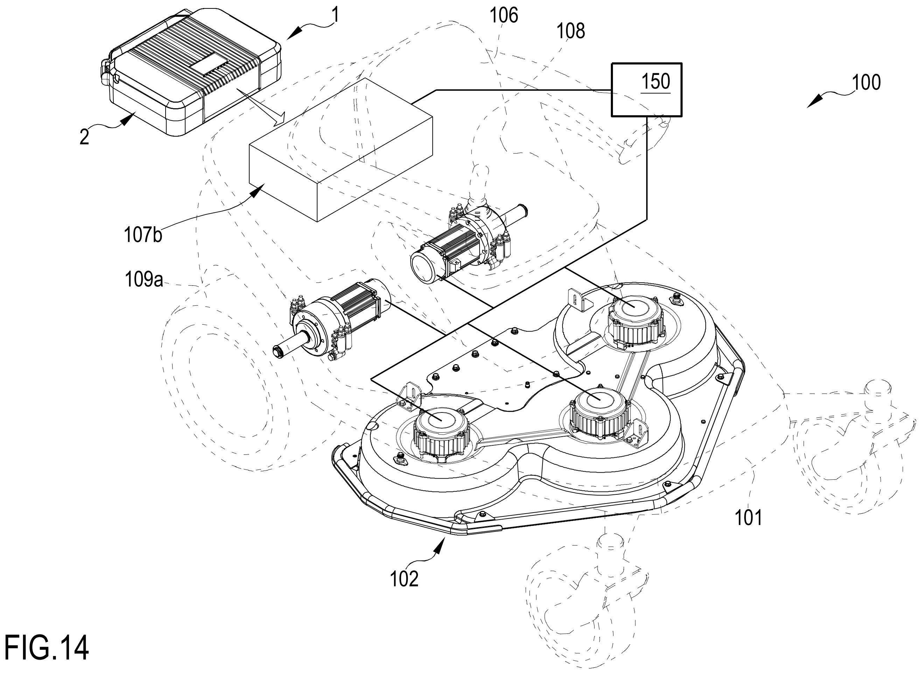

The vehicle, depicted in Figures 13 and 14, can be a device manually driven by a user from a driving station 106 and comprising traction members, for example one or more wheels or tracks, adapted to determine the advancement of the vehicle. In particular, the vehicle comprises a right traction member 109a and a left traction member 109b, in this case depicted consisting of a right drive wheel and a left drive wheel, intended for the transmission of traction to the ground. In other words, the right traction member 109a and the left traction member 109b are for example motorized wheels, adapted to determine the movement of the vehicle on the ground to be maintained.

As shown in Figure 13, the vehicle comprises a single electric motor 105 mechanically connected, for example by means of a differential transmission member, to both the right traction member 109a and to the left traction member 109b, so as to rotate both traction members independently and simultaneously.

The possibility of providing a first and a second electric motor 105a, 105b respectively connected to the right traction member 109a and to the left traction member 109b is not excluded. The first and second electric motors 105a, 105b are configured to determine the forward, reverse or arcuate trajectory thereof of the vehicle by respectively rotating the right traction member 109a and the left traction member 109b. In particular, the first electric motor 105a comprises a shaft on which the right traction member 109a is keyed, while the second electric motor 105b comprises a respective shaft on which the left traction member 109b is keyed. The rotation of the shafts, respectively of the first and second motors 105a, 105b, determines the rotation of the right traction member 109a and the left traction member 109b and thus the movement of the vehicle.

It should be noted that the right traction member 109a is mechanically connected exclusively to the first electric motor 105a, while the left traction member 109b is mechanically connected only to the second electric motor 105b: the traction members are thus moved independently of each other by means of a dedicated motor.

The vehicle can further comprise one or more non-motorized auxiliary wheels 112, configured for allowing the stable movement of the vehicle on three, four or more wheels. In particular, the vehicle comprises a right auxiliary wheel and a left auxiliary wheel freely movable for rotation around a vertical axis transverse to the ground. The auxiliary wheels 112 are therefore not wheels controlled by a steering mechanism, but freely steering wheels.

The vehicle 100 further comprises a support frame 101 extending in length between a front portion at which the auxiliary wheels 112 operate and a rear portion at which the right traction member 109a and the left traction member 109b operate. As shown in Figures 13 and 14, the right traction member 109a and the left traction member 109b are defined at a rear axle of the vehicle, while the auxiliary wheels 112 are defined at a front axle opposite the rear axle of the vehicle.

In the accompanying figures, a vehicle comprising exclusively two motorized traction members independently of each other (right traction member and left traction member) has been shown, however, an embodiment of the invention in which the traction members and the auxiliary wheels are all motorized is not excluded.

The vehicle further comprises at least one battery 1 according to the description previously provided, electrically connected to the electric motor 105 or alternatively to the first and second electric motors 105a, 105b. In a first embodiment variant of the vehicle, illustrated in Figure 13, there is a front compartment 107a, situated in front of the driving station 106, which defines a special compartment for housing the batteries inside respective battery-holder supports 107. The front compartment 107a can be compared to the hood of a conventional lawnmower vehicle, where, instead of an internal combustion engine, the batteries 1 are housed, thus ensuring a compact and efficient design for the installation of the same batteries.

In a second embodiment shown in Figure 14, the vehicle 100 can comprise a rear compartment 107b, located at the rear or below the driving station 106, defining a respective compartment for housing the batteries inside battery-holder supports 107.

It should be noted that the batteries 11 are not exclusively configured to power the first and second electric motors 105a, 105b, but more generally configured to power each on-board electrical/electronic component, including a motor operating on a work tool 102 to perform grass mowing tasks.

The vehicle 100 further comprises a work tool 102 carried below by the support frame 101 and configured for performing a process on the land to be maintained. In particular, the work tool 102 can comprise at least one rotary blade adapted to contact the ground, for example to perform a grass cutting operation. The vehicle can further comprise at least one auxiliary electric motor 113, carried by the support frame 101 and configured for rotating the rotary blade. The work tool 102 can comprise a plurality of rotary blades, in particular two rotary blades. The rotary blades are spaced apart and, for example, rotatable according to parallel axes. In particular, the blades can lie adjacent to each other and operate on parallel cutting planes, with each of the blades rotating about a respective axis transverse to the ground. The blades can have the same diameter, or, alternatively, they can have different diameters from each other. It should also be noted that the rotary blades are preferably equirotating, so as to direct the cut grass towards the same discharge duct 114.

Each rotary blade is mechanically connected to a respective auxiliary electric motor 113 of the vehicle. In fact, the vehicle 100 can include a plurality of auxiliary electric motors 113, each of which is configured for independently rotating a respective rotary blade. However, an embodiment of the invention in which the vehicle has a single auxiliary electric motor 113 configured for rotating each rotary blade, for example by using a differential transmission member interposed between the auxiliary electric motor 113 and each blade, is not excluded (Figure 13). The vehicle 100 can also comprise a controller 150 connected to the electric motor 105 or to each electric motor 105a, 105b used to carry out the movement of the entire vehicle, to the auxiliary electric motors 113 arranged to drive the rotary blades and to the battery 1 to monitor and manage the delivery of energy, optimize operational efficiency and ensure the correct operation of the components during the different phases of use of the vehicle. In an example, the controller 50 of the battery 1 is connected, by means of the connector 30, to the controller 150 to provide electrical power to the electric motors 105, 105a, 105b, 113 and to exchange control signals and data relating to the state of the battery. In particular, the connector 30 can comprise both power contacts through which the power supply current destined for the motors transits, and signal contacts through which data such as the state of charge of the battery, the voltage and current delivered, the temperature of the cells, and any alarm or limitation conditions are transmitted. The controller 150 can use such information to dynamically adapt the power requests to the motors as a function of the available residual range, or to signal the user the need for recharging or abnormal conditions by means of visual or audible indicators.

## Claims

1. Battery for gardening equipment comprising:

   - a casing (2),
   - a plurality of electrochemical cells (3) housed in the casing (2) and configured to convert chemical energy into electrical energy, wherein said plurality of electrochemical cells (3) is divided into two or more groups, each of which comprises cells aligned along respective development axes (X) parallel to one another,
   - a control unit (50) connected to each group of electrochemical cells of said plurality,
   - an electrical connection component (60) connected to each group of electrochemical cells and to the control unit (50), configured to transfer electric current coming from the groups of cells to the control unit (50),

   wherein the electrical connection component (60) comprises two or more terminals (61), each connected to a respective group of electrochemical cells for partitioning the flow of electric current directed towards the control unit (50).

2. Battery according to the preceding claim, wherein the electrical connection component (60) comprises a conductive plate (62), near a terminal end (69) of the casing (2) and extending along an extension direction (Y) transverse to the development axes (X), wherein said two or more terminals (61) are uniformly distributed along the extension direction (Y).

3. Battery according to any one of the preceding claims, wherein the number of said two or more electrical terminals (61) of the electrical connection component (60) is a function of the number of said two or more electrochemical cell groups (3), wherein a ratio of the number of electric terminals (61) to the number of electrochemical cell groups (3) is comprised between 0.2 and 0.5, optionally comprised between 0.3 and 0.4.

4. Battery according to any one of the preceding claims when dependent on claim 2, wherein the electrical connection component (60) comprises at least three electrical terminals (61) which are spaced apart from each other and from a first and a second end (67a, 67b) of the conductive plate (62), opposite each other along the extension direction (Y),

   wherein said electrical terminals (61) have:

   - a central terminal (61a) located in a central area of the conductive plate (62),
   - two lateral terminals (61b) located laterally to the central terminal (61a),

   wherein the lateral terminals (61b) are equidistant from the central terminal (61a) and from a respective one of the first and second ends (67a, 67b) of the conductive plate (62).

5. Battery according to any one of the preceding claims when dependent on claim 2, wherein the conductive plate (62) has a width, measured parallel to the development axis (X) of the groups of cells, variable along the extension direction (Y),

   wherein the conductive plate (62) has a plurality of junction zones (63) that can be connected to the electrochemical cells and having a greater width than secondary zones (64) interposed between two adjacent junction zones (63),
   wherein a ratio between the width of the conductive plate (62) at the junction zones (63) and the width of the conductive plate (62) at the secondary zones (64) is comprised between 1.1 and 3,
   wherein the junction zones (63) of the conductive plate (62) comprise:

   - one or more junction zones located at a first and second end (67a, 67b) of the conductive plate (62) opposite each other along the extension direction (Y),
   - one or more junction zones located at each electrical terminal (61) of the electrical connection component (60),
   - one or more junction zones located at an intermediate area (66) defined between two adjacent electrical terminals (61),

   wherein the conductive plate (62) is delimited by a perimeter edge which, at each secondary zone (64), has a curvilinear section (68), optionally with an arc of circumference, having a concavity facing a central zone of the battery, wherein said curvilinear section (68) is configured to promote the transit of electric current along the conductive plate (62), reducing overheating of the same conductive plate (62).

6. Battery according to the preceding claim, wherein the electrical connection component (60) comprises a plurality of sheets (65) that constrain the conductive plate (62) to the electrochemical cells (3) of said plurality, wherein said sheets (65) are located at a respective one of said junction zones (63) of the conductive plate (62),

   wherein the sheets (65) develop transversely to the conductive plate (62) of the electrical connection component (60), positioning the same conductive plate (62) above the electrochemical cells (3) of said plurality and defining a passage opening between the conductive plate (62) and the electrochemical cells (3) to electrically isolate the electric terminals (61) from the same electrochemical cells (3),
   wherein the electrochemical cells (3) belonging to each group are electrically connected in series,
   wherein the electrochemical cells of each group have an incremental electric potential difference proceeding along the development axis (X) until a maximum electric potential difference is reached at one/the terminal end (69) of the casing (2) where the electrical connection component (60) is located; and
   wherein the sheets (65) engage the conductive plate (62) to the electrochemical cells (3) having maximum electric potential difference.

7. Battery according to any one of the preceding claims comprising a plurality of positive cables (P) connecting said two or more terminals (61) of the electrical connection component (60) to a same positive terminal (70a) of the control unit (50),

   wherein said positive cables (P) have the same length to less than a difference of below 10%,
   wherein the positive cables (P) are equal in number to said two or more terminals (61),
   wherein each positive cable (P) connects a respective terminal (61) to the positive terminal (70a) of the control unit (50).

8. Battery according to any one of the preceding claims comprising a secondary electrical connection component (60') connected to each group of electrochemical cells and to the control unit (50), configured to transfer electric current coming from the control unit (50) to each group of cells, wherein the secondary electrical connection component (60') comprises two or more additional terminals (61'), each connected to a respective group of electrochemical cells for partitioning the flow of electric current coming from the control unit (50),

wherein the secondary electrical connection component (60') has an additional conductive plate (62') identical to the conductive plate (62) of the electrical connection component (60), wherein said additional conductive plate (62') is near a secondary terminal end (69') of the casing (2) opposite to the terminal end (69) where the conductive plate (62) of the electrical connection component (60) is located.

9. Battery according to the preceding claim comprising a plurality of negative cables (N) connecting said two or more additional terminals (61') of the electrical connection component (60) to a same negative terminal (70b) of the control unit (50),

> wherein said negative cables (N) have a same length to less than a difference of below 10%, wherein the negative cables (N) are equal in number to said two or more additional terminals (61'),
> wherein each negative cable (N) connects a respective additional terminal (61') to the negative terminal (70b) of the control unit (50).

10. Battery according to any one of the preceding claims comprising a network of busbars (79) configured to electrically connect the electrochemical cells of said plurality, wherein the network of busbars (79) comprises:

> - two terminal busbars (75) engaged with electrochemical cells located at the terminal end(s) (67) of the casing (2) that are opposite along the development axis (X),
> - a plurality of central busbars (71) engaged to the remaining electrochemical cells (3) of said plurality.

11. Battery according to the preceding claim, wherein each terminal busbar (7) comprises:

> - a plurality of terminal junction points (80) engaged to a respective electrochemical cell,
> - a plurality of terminal connection bridges (81) extending transversely to the development axes (X), said terminal connection bridges (81) engaging adjacent terminal junction points (80) to electrically connect the respective electrochemical cells (3) in parallel.

12. Battery according to any one of the two preceding claims, wherein each central busbar (71) has a connection module (74) having:

> - two junction points (72) that can be engaged to a respective electrochemical cell (3) and are aligned along the development axis (X) of said electrochemical cells (3),
- a main connection bridge (73) extending parallel to the development axis (X) to connect the junction points (72),
wherein the connection module (74) electrically connects in series two electrochemical cells (3) of a same cell group,
wherein each central busbar (71) comprises a plurality of connection modules (74) placed parallel to each other along respective development axes (X), wherein each connection module (74) connects electrochemical cells (3) belonging to a respective group of electrochemical cells,
wherein each central busbar (71) comprises a plurality of secondary connection bridges (83) connecting together two junction points (72) belonging to adjacent connection modules (74),
wherein each secondary connection bridge (83) connects two junction points (72) aligned along a/the extension direction (Y) transverse to the development axes (X),
wherein each secondary connection bridge (83) electrically connects in parallel two adjacent connection modules (74),
wherein the battery comprises a plurality of central busbars (71) side by side and spaced apart along a direction parallel to the development axes (X).

13. Battery according to any one of the preceding three claims, wherein the network of busbars (79) lies on an ideal plane placed at an upper face (3a) of the electrochemical cells (3) of said plurality, wherein the battery further comprises an auxiliary network of busbars (82) engaged with a lower face (3b) of the electrochemical cells (3) of said plurality, the lower face (3b) of the electrochemical cells (3) being opposite the upper face (3a) with respect to a direction transverse to the ideal lying plane of the network of busbars (79),

> wherein the auxiliary network of busbars (82) comprises a plurality of auxiliary busbars (71') identical to the central busbars (71) of the network of busbars (79), said auxiliary busbars (71') of said plurality being side by side and spaced apart along a direction parallel to the development axes (X),
> wherein the network of busbars (79) is offset with respect to the auxiliary network of busbars (82) along the development axis (X),
> wherein the electrochemical cells (3) are arranged alternately, with groupings of cells having a positive pole oriented in a first direction and further groupings of cells having a positive pole oriented in an opposite direction,
wherein the network of busbars (79) is configured to electrically connect concordant poles of two adjacent electrochemical cells (3) along the development axis (X),
wherein the auxiliary network of busbars (82) is configured to electrically connect discordant poles of two adjacent electrochemical cells (3) along the development axis (X).

14. Vehicle for land maintenance, in particular for cutting lawns or gardens, comprising:

- a support frame (101),
- a driving station (106) for an operator carried by the support frame (101),
- at least one work tool (102) carried below by said support frame (101) and configured to perform work on plots of land to be maintained,
- at least one command device (108), that can be operated by the operator in said driving station (106), to cause a movement of the vehicle,
- at least one right traction member (109a) and one left traction member (109b) carried by the support frame (101) and intended for the transmission of traction to the ground,
- at least one electric motor (105) coupled to the right traction member (109a) and to the left traction member (109b),
- at least one battery (1) according to any one of the preceding claims, configured to electrically power the electric motor (105).

15. Vehicle according to the preceding claim, comprising at least one of:

- a front compartment (107a) carried by the support frame (101) and located in front of the guide station (106), said front compartment (107a) defining a compartment for housing a plurality of batteries (1),
- a rear compartment (107b) carried by the support frame (101) and located to the rear of the guide station (106), said rear compartment (107b) defining a compartment for housing a plurality of batteries (1).

FIG.1

EP 4 769 635 A1

FIG.2

FIG.3

FIG.4

FIG.5

FIG.6

FIG.7B

FIG.7A

FIG.8

EP 4 769 635 A1

FIG.9

FIG.10A
ARTE ANTERIORE

5.43e+05A

2.74e+05A

5e+03A

EP 4 769 635 A1

FIG.10B
ARTE ANTERIORE

FIG.11A

>5.43e+05A

2.74e+05A

<5e+03A

EP 4 769 635 A1

FIG.11B

FIG.12

EP 4 769 635 A1

106

109b

108

105

109a

100

1

2

150

107a

36

102

101

EP 4 769 635 A1

FIG.13

FIG.14

EP 4 769 635 A1

FIG. 15

FIG. 16

## EUROPEAN SEARCH REPORT

**Application Number**

EP 25 22 7511

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/052658 A1 (WAE TECH LIMITED [GB]) 14 March 2024 (2024-03-14) | 1-11,14, 15 | INV.<br>H01M10/42 |
| A | * abstract; claims 1-20; figures 1,3,5 *<br>* page 1, line 7 - line 12 *<br>* page 8, line 32 - page 9, line 21 *<br>* page 8, line 17 - line 31 *<br>* page 15, line 4 - line 16 *<br>* page 13, line 15 - line 23 * | 12,13 | H01M50/213<br>H01M50/249<br>H01M50/296<br>H01M50/503<br>H01M50/507<br>H01M50/509<br>H01M50/51 |
| A | ----- <br>WO 2024/015593 A1 (BRIGGS & STRATTON LLC [US]) 18 January 2024 (2024-01-18)<br>* the whole document * | 1-15 | H01M50/519<br><br>ADD.<br>B60L58/25 |
| A | ----- <br>US 2024/097259 A1 (GUGLIELMO KENNON [US] ET AL) 21 March 2024 (2024-03-21)<br>* the whole document * | 1-15 | A01D34/78 |
| A | ----- <br>US 2019/097204 A1 (LIPOSKY JOSHUA [US] ET AL) 28 March 2019 (2019-03-28)<br>* the whole document *<br>----- | 1-15 | |

**TECHNICAL FIELDS SEARCHED (IPC)**

H01M
B60L
A01D

The present search report has been drawn up for all claims

| Place of search | Date of completion of the search | Examiner |
|---|---|---|
| The Hague | 13 May 2026 | Ramos Alonso, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7511

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | Publication date | Patent family member(s) | Publication date |
|---|---|---|---|
| WO 2024052658 A1 | 14-03-2024 | AU 2023336731 A1 | 03-04-2025 |
| | | CN 119948669 A | 06-05-2025 |
| | | EP 4584839 A1 | 16-07-2025 |
| | | GB 2622205 A | 13-03-2024 |
| | | WO 2024052658 A1 | 14-03-2024 |
| WO 2024015593 A1 | 18-01-2024 | CN 119856364 A | 18-04-2025 |
| | | EP 4555601 A1 | 21-05-2025 |
| | | US 20260021723 A1 | 22-01-2026 |
| | | WO 2024015593 A1 | 18-01-2024 |
| US 2024097259 A1 | 21-03-2024 | CA 3195152 A1 | 14-04-2022 |
| | | EP 4226453 A1 | 16-08-2023 |
| | | JP 2023544852 A | 25-10-2023 |
| | | KR 20230118812 A | 14-08-2023 |
| | | US 2024097259 A1 | 21-03-2024 |
| | | WO 2022076827 A1 | 14-04-2022 |
| US 2019097204 A1 | 28-03-2019 | AU 2018335078 A1 | 02-04-2020 |
| | | CA 3075976 A1 | 28-03-2019 |
| | | CN 111670509 A | 15-09-2020 |
| | | EP 3685457 A1 | 29-07-2020 |
| | | JP 2020534661 A | 26-11-2020 |
| | | KR 20200065010 A | 08-06-2020 |
| | | US 2019097204 A1 | 28-03-2019 |
| | | WO 2019060047 A1 | 28-03-2019 |

EPO FORM P0459

For more details about this annex : see Official Journal of the European Patent Office, No. 12/82

**REFERENCES CITED IN THE DESCRIPTION**

**Patent documents cited in the description**

• WO 2024052658 A1